(19) Europäisches Patentamt

European Patent Office

Office européen des brevets

(11) **EP 1 154 405 B1**

(12) **FASCICULE DE BREVET EUROPEEN**

(45) Date de publication et mention
de la délivrance du brevet:
**20.09.2006 Bulletin 2006/38**

(51) Int Cl.:
***G10L 15/20*** *(2006.01)* ***G10L 21/02*** *(2006.01)*

(21) Numéro de dépôt: **01401043.3**

(22) Date de dépôt: **24.04.2001**

(54) **Procédé et dispositif de reconnaissance vocale dans des environnements a niveau de bruit fluctuant**

Verfahren und Vorrichtung zur Spracherkennung in einer Umgebung mit variablerem Rauschpegel

Method and device for speech recognition in surroundings with varying noise levels

(84) Etats contractants désignés:
**BE DE FR GB NL**

(30) Priorité: **09.05.2000 FR 0005864**

(43) Date de publication de la demande:
**14.11.2001 Bulletin 2001/46**

(73) Titulaire: **Thales**
**75008 Paris (FR)**

(72) Inventeur: **Breton, Pierre-Albert**
**94117 Arcueil Cedex (FR)**

(74) Mandataire: **Brochard, Pascale**
**Marks & Clerk France**
**31-33 Avenue Aristide Briand**
**94117 Arcueil Cedex (FR)**

(56) Documents cités:
**EP-A- 0 918 317**

• **YOMA N B ET AL: "WEIGHTED MATCHING ALGORITHMS AND RELIABILITY IN NOISE CANCELLING BY SPECTRAL SUBTRACTION" IEEE INTERNATIONAL CONFERENCE ON ACOUSTICS, SPEECH, AND SIGNAL PROCESSING (ICASSP),US,LOS ALAMITOS, IEEE COMP. SOC. PRESS, 21 avril 1997 (1997-04-21), pages 1171-1174, XP000822661 ISBN: 0-8186-7920-4**
• **VASEGHI S V ET AL: "NOISE COMPENSATION METHODS FOR HIDDEN MARKOV MODEL SPEECH RECOGNITION IN ADVERSE ENVIRONMENTS" IEEE TRANSACTIONS ON SPEECH AND AUDIO PROCESSING,US,IEEE INC. NEW YORK, vol. 5, no. 1, 1997, pages 11-21, XP000785324 ISSN: 1063-6676**
• **HIRSCH H G ET AL: "NOISE ESTIMATION TECHNIQUES FOR ROBUST SPEECH RECOGNITION" PROCEEDINGS OF THE INTERNATIONAL CONFERENCE ON ACOUSTICS, SPEECH, AND SIGNAL PROCESSING (ICASSP),US,NEW YORK, IEEE, 9 mai 1995 (1995-05-09), pages 153-156, XP000657953 ISBN: 0-7803-2432-3**
• **HANSEN J H L: "Analysis and compensation of speech under stress and noise for environmental robustness in speech recognition" SPEECH COMMUNICATION,NL,ELSEVIER SCIENCE PUBLISHERS, AMSTERDAM, vol. 20, no. 1, 1 novembre 1996 (1996-11-01), pages 151-173, XP004015450 ISSN: 0167-6393**

**Description**

La présente invention est relative à un procédé de reconnaissance vocale dans un environnement sonore dans lequel le niveau de bruit peut fluctuer et un dispositif de reconnaissance vocale dans un signal acoustique présentant du bruit susceptible de fluctuer.

L'invention concerne donc le traitement de signaux acoustiques contenant de la parole captée en milieu bruité, ce bruit pouvant varier dans le temps. Elle trouve son application plus particulièrement, mais pas exclusivement, dans le cadre de la reconnaissance vocale à bord de tous types de véhicules par exemple dans les cockpits d'aéronefs ou dans les habitacles de véhicules automobiles. Elle s'applique également aux communications téléphoniques ou radio téléphoniques en milieu bruité dans la rue en ville par exemple.

A propos de l'environnement sonore dans un cockpit d'aéronef, les bruits résultent des moteurs, de la climatisation, de la ventilation, des équipements de bord, des bruits aérodynamiques. Dans cette application, les bruits sont variables et très dépendants du régime des moteurs. Les bruits ne seront pas du tout les mêmes lorsque l'aéronef est à l'arrêt, en phase de roulage, en phase de décollage ou d'atterrissage, en régime stabilisé de croisière. Ces bruits sont captés, au moins partiellement, par un microphone dans lequel parle le pilote ou un autre membre de l'équipage et ils masquent le signal utile, c'est à dire les conversations que l'on cherche à reconnaître.

De la même manière, l'environnement sonore n'est pas du tout le même dans un véhicule automobile lorsqu'il est à l'arrêt ou en marche. En ville, le niveau sonore est très dépendant de la circulation automobile.

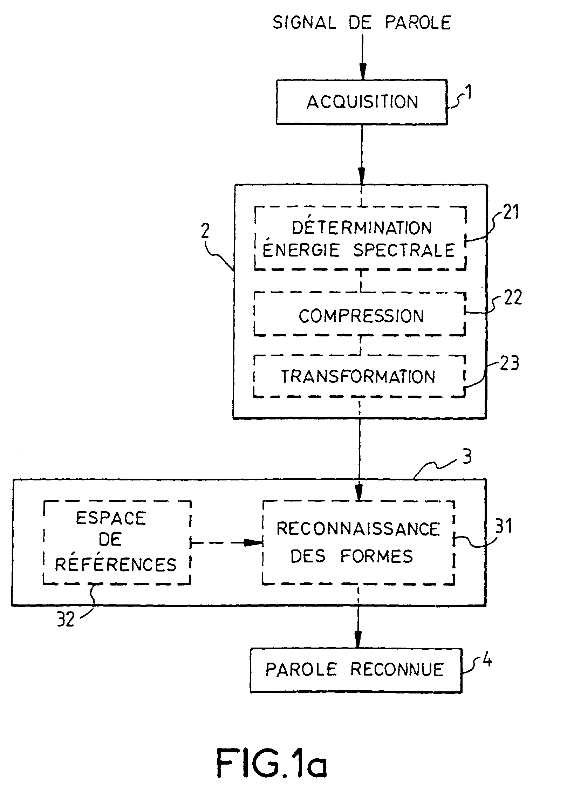

Dans l'art connu, les systèmes de reconnaissance vocale les plus simples, qui ne prennent pas en compte le bruit, comportent au moins trois blocs comme illustré à la figure 1a. Ces blocs sont : un bloc 1 d'acquisition du signal de parole, un bloc 2 de paramétrisation ou chaîne de paramétrisation et un bloc 3 de reconnaissance de formes.

Dans le bloc d'acquisition 1, le signal acoustique traité est en fait un signal de parole capté par un transducteur électroacoustique. Ce signal est numérisé par échantillonnage et découpé en un certain nombre de trames recouvrantes ou non, de même durée ou non. En traitement de la parole, il est usuel de considérer que des régimes stationnaires s'établissent sur des durées comprises entre 10 et 40 ms. Ce sont ces intervalles de temps qui sont dénommés trames. Le recouvrement entre trames est préconisé à cause de certains phonèmes dits « plosifs » correspondant aux sons « p », « t », « k », « b », « d », « g » qui ont une durée inférieure à celle d'une trame. Un phonème est la plus petite unité présente dans la parole susceptible par sa présence de changer la signification d'un mot.

Dans le bloc 2 de paramétrisation, on associe chaque trame à un vecteur de paramètres qui traduit l'information acoustique contenue dans la trame. Il y a plusieurs méthodes pour déterminer un vecteur de paramètres. Un exemple classique de méthode est la méthode qui utilise les coefficients cepstraux de type MFCC sigle en langue anglaise de « Mel Frequency Cepstral Coefficient ».

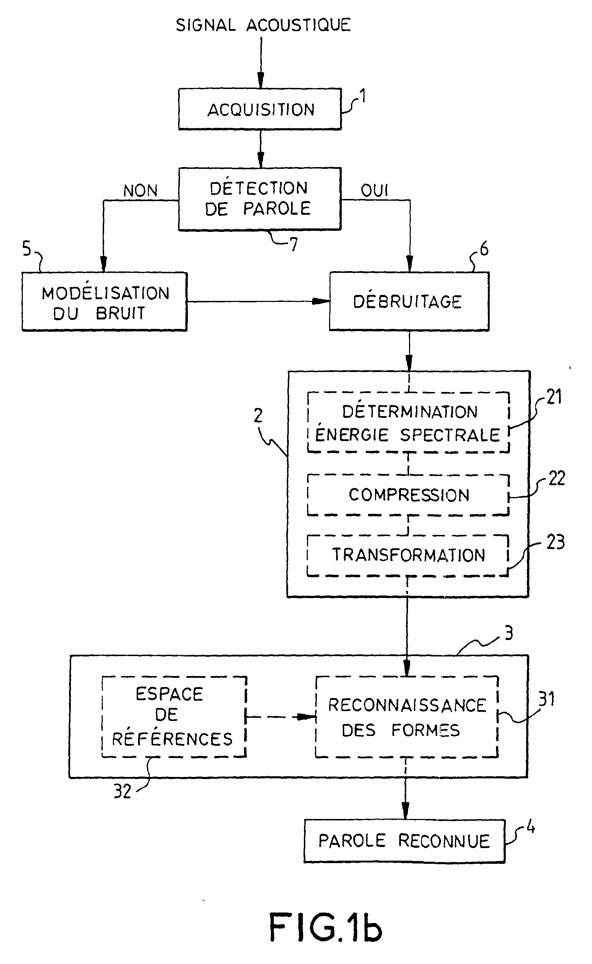

Le bloc 2 de paramétrisation représenté sur la figure 1 est générique. Il fait intervenir une estimation de l'énergie spectrale fenêtrée et englobe donc les chaînes de paramétrisation de type MFCC. Il comporte plusieurs modules 21, 22, 23, parmi lesquels le module 21 qui permet de déterminer l'énergie spectrale de chaque trame dans un certain nombre de canaux fréquentiels Nb ou fenêtres. Il reçoit chaque trame et délivre, pour chacune d'entre elles, une valeur d'énergie spectrale ou coefficient spectral par canal fréquentiel. Le module 22 effectue une compression des Nb coefficients spectraux obtenus au module 21 pour tenir compte du comportement du système auditif humain. Le module 23 effectue une transformation des coefficients spectraux compressés, ces coefficients spectraux compressés transformés sont les paramètres du vecteur de paramètres recherché.

Le bloc 3 de reconnaissance de formes comprend lui-même au moins deux modules:un module 31 de reconnaissance de formes proprement dit et un module 32 de mémorisation de références acoustiques appelé espace de références. Le module 31 évalue la série des vecteurs de paramètres issue de la paramétrisation par rapport à des références obtenues lors d'une phase d'apprentissage, ces références traduisent les empreintes acoustiques de chaque phrase, chaque mot ou chaque phonème, plus généralement chaque commande. A l'issue de la dernière trame, ce qui correspond généralement à la fin d'une commande, la comparaison donne soit une distance entre la commande testée et des commandes de référence, la commande de référence présentant la distance la plus faible est reconnue, soit une probabilité pour que la série des vecteurs de paramètres appartiennent à une suite de phonèmes. Les signaux numériques représentant une commande reconnue sont transmis à un dispositif d'utilisation 4.

Les algorithmes classiquement utilisés pendant cette phase sont dans le premier cas de type DTW sigle anglosaxon pour Dynamic Time Warping ou, dans le second cas de type HMM sigle anglo-saxon pour Hidden Markov Models.

Mais le bruit est la principale source d'erreur dans le processus de reconnaissance vocale. Le signal acoustique traité est le signal de parole additionné au signal de bruit. Le signal de bruit masque le signal de parole, il entraîne une perte de résolution de la reconnaissance vocale. Plus le niveau de bruit est fort plus la perte de la reconnaissance est importante.

Pour essayer de s'affranchir du bruit, on peut introduire un traitement de débruitage avant la détermination de l'énergie spectrale de manière à minimiser le signal de bruit dans le signal acoustique traité. Ce débruitage peut se faire de nombreuses manières et notamment comme expliqué dans la demande de brevet français FR-2 765 715. Dans cette demande de brevet, le débruitage est réalisé à partir des caractéristiques spectrales d'un modèle de bruit mis en mémoire et utilise un filtre de Wiener paramétré par les caractéristiques spectrales du modèle de bruit. Cette demande de brevet explique la recherche automatique et permanente du modèle de bruit et l'étape de débruitage. Sur la figure 1b, on retrouve le bloc d'acquisition 1, le bloc de paramétrisation 2 et le bloc de reconnaissance de formes 3 comme sur la figure 1a mais un bloc de détection de parole 7, un bloc de modélisation du bruit 5 et un bloc de débruitage 6 apparaissent entre le bloc d'acquisition 1 et le bloc de paramétrisation 2.

Mais malgré le débruitage, le signal acoustique débruité transmis au bloc de paramétrisation 2 reste entaché d'un bruit résiduel d'amplitude non négligeable qui perturbe le processus de reconnaissance vocale. L'adjonction du traitement de débruitage n'est pas suffisante pour lutter contre le bruit.

On a cherché à utiliser des chaînes de paramétrisation qui soient les plus robustes possible, c'est à dire qui soient les moins affectées possible par le bruit. De telles chaînes traitent de manière prépondérante les parties les plus énergétiques du signal acoustique. En effet, plus une composante est énergétique, moins elle est vulnérable au bruit. La contrepartie de la robustesse est la perte de la sensibilité.

Le problème dans les applications envisagées, est que le bruit peut varier, il peut être par moment quasi inexistant et par moment très fort. Le traitement du signal acoustique capté doit être performant quel que soit le niveau de bruit. Un compromis optimal entre robustesse et sensibilité doit être obtenu. C'est une première difficulté. Le problème se pose encore avec plus d'acuité si le niveau de bruit est très fortement variable dans un temps très court. C'est le cas par exemple de l'automobile ou de l'aéronef qui initialement arrêtés démarrent.

Ainsi, le brevet EP 0 918 317 décrit un procédé de filtrage fréquentiel pour le débruitage de signaux de parole pour la reconnaissance automatique de la parole dans lequel un modèle de bruit est estimé pour chaque trame et sa compatibilité par rapport au modèle précédent est vérifiée. Cependant, ce procédé peut entraîner des adaptations et des mises à jour trop fréquentes alors que le bruit n'est pas vraiment gênant.

La présente invention s'est fixée comme but d'adapter en temps réel la paramétrisation et la reconnaissance de formes au bruit après avoir identifié une transition dans le bruit ambiant de manière à rendre la reconnaissance vocale la plus robuste possible en présence de bruit fort et la plus sensible possible lorsque le bruit est inexistant ou quasi inexistant.

Pour y parvenir le procédé de reconnaissance vocale dans un signal acoustique selon l'invention comprend :

une phase de numérisation et de découpage en une suite de trames temporelles du signal acoustique bruité,
une phase de paramétrisation de trames temporelles contenant de la parole de manière à obtenir, par trame, un vecteur de paramètres dans le domaine fréquentiel, ce vecteur de paramètres traduisant le contenu acoustique de la trame, une phase de reconnaissance de formes dans laquelle on évalue les vecteurs de paramètres par rapport à des références préenregistrées dans un espace de références lors d'une phase d'apprentissage préalable, de manière à obtenir la reconnaissance par détermination d'au moins une référence la plus proche des vecteurs de paramètres,
une phase de détection de parole, pendant laquelle les trames de bruit seules sont isolées,
une phase de recherche réitérative de modèles de bruit successifs dans la suite des trames temporelles, un nouveau modèle de bruit remplaçant un modèle de bruit courant, un modèle de bruit comportant plusieurs trames successives,

caractérisé en ce qu'il comporte

- une phase de recherche d'une transition de bruit entre le nouveau modèle de bruit et le modèle courant, ladite phase de recherche de transition comportant une étape de recherche d'une incompatibilité énergétique et/ou une étape de recherche d'une incompatibilité spectrale entre le nouveau modèle de bruit et le modèle courant, la détection d'une incompatibilité traduisant une transition de bruit,

et lorsqu'une transition de bruit a été détectée, en ce qu'il comporte une phase de mise à jour de l'espace de références en fonction du nouveau modèle de bruit, la phase de paramétrisation incluant une étape d'adaptation des paramètres au nouveau modèle de bruit.

L'étape de recherche d'une incompatibilité énergétique peut comporter la comparaison du rapport entre l'énergie moyenne du nouveau modèle de bruit et l'énergie moyenne du modèle de bruit courant avec un seuil bas et un seuil haut, une incompatibilité énergétique étant trouvée si le rapport se place à l'extérieur de l'intervalle borné par les deux seuils.

Pour éviter des adaptations et des mises à jour trop fréquentes lorsque le bruit n'est pas vraiment gênant, l'étape de recherche d'une incompatibilité énergétique peut comporter également une comparaison de l'énergie moyenne du nouveau modèle de bruit et de l'énergie moyenne du modèle de bruit courant à seuil d'énergie plancher au-dessous duquel le bruit est négligeable, l'incompatibilité énergétique déterminée par la comparaison du rapport entre l'énergie moyenne du nouveau modèle de bruit et l'énergie moyenne du modèle de bruit courant étant ignorée lorsque l'énergie moyenne du nouveau modèle de bruit et l'énergie moyenne du modèle de bruit courant sont toutes deux inférieures au seuil d'énergie plancher.

L'étape de recherche d'une incompatibilité spectrale peut comporter, à partir de coefficients spectraux traduisant respectivement l'énergie spectrale des trames du modèle de bruit courant et l'énergie spectrale des trames du nouveau modèle de bruit dans au moins un canal fréquentiel, une comparaison du rapport entre le coefficient spectral associé au canal fréquentiel du nouveau modèle de bruit et le coefficient spectral associé au même canal fréquentiel du modèle de bruit courant avec un seuil bas et un seuil haut, une incompatibilité spectrale étant trouvée si le rapport se place à l'extérieur de l'intervalle borné par les deux seuils.

Toujours pour éviter des mises à jour et des adaptations trop fréquentes qui ne seraient pas vraiment justifiées, l'étape de recherche d'une incompatibilité spectrale peut comporter également, pour au moins un canal fréquentiel, une comparaison du coefficient spectral du nouveau modèle de bruit dans ce canal fréquentiel et du coefficient spectral du modèle de bruit courant dans ce canal fréquentiel à un coefficient spectral, plancher dans ce canal fréquentiel, plancher au-dessous duquel le bruit est négligeable, une incompatibilité spectrale déterminée par la comparaison du rapport entre coefficients spectraux étant ignorée lorsque, dans ce canal fréquentiel, les coefficients spectraux du nouveau modèle et du modèle courant sont tous deux inférieurs au coefficient spectral plancher.

La phase de paramétrisation peut comporter une étape de détermination de coefficients spectraux associés chacun à un canal fréquentiel traduisant chacun l'énergie spectrale d'une trame contenant de la parole dans le canal fréquentiel,
l'étape d'adaptation des paramètres comportant une détermination, pour chaque coefficient spectral, d'un opérateur de robustesse qui traduit la confiance à accorder au coefficient spectral par rapport au niveau de bruit, dans le même canal fréquentiel, du nouveau modèle de bruit ayant déclenché la transition, une pondération du coefficient spectral avec l'opérateur de robustesse, une détermination du vecteur de paramètres à partir des coefficients spectraux pondérés.

L'opérateur de robustesse pour la paramétrisation peut vérifier la relation suivante :

$$\text{OpRob}\left(B_{i,par}\right) = \left\{ \max\left( 0,25 + \frac{B_{i,par} - P\left(B_{i,nouvmod}\right)}{B_{i,par} + 2P\left(B_{i,nouvmod}\right)}, 0 \right) \right\}^{2}$$

$B_{i,par}$ étant le coefficient spectral et $P(B_{i,nouvmod})$ un paramètre dépendant du niveau de bruit du nouveau modèle de bruit ayant déclenché la transition, dans le canal fréquentiel i.

La phase de mise à jour de l'espace de références peut comporter, à partir de coefficients spectraux de base associés chacun à un canal fréquentiel, traduisant chacun l'énergie spectrale d'une trame de base obtenue lors de la phase d'apprentissage, la détermination d'un opérateur de robustesse pour chaque coefficient spectral de base, cet opérateur de robustesse traduisant la confiance à accorder au coefficient spectral par rapport au niveau de bruit,
la pondération des coefficients spectraux de base avec les opérateurs de robustesse respectifs,
l'élaboration des références mises à jour avec les coefficients spectraux pondérés.

L'opérateur de robustesse pour la mise à jour de l'espace de références peut vérifier la relation suivante :

$$\text{OpRob}\left(B_{i,bas}\right) = \left\{ \max\left( 0,25 + \frac{B_{i,bas} - P\left(B_{i,nouvmod}\right)}{B_{i,bas} + 2P\left(B_{i,nouvmod}\right)}, 0 \right) \right\}^{2}$$

$B_{i,bas}$ étant le coefficient spectral de base et $P(B_{i,nouvmod})$ un paramètre dépendant du niveau de bruit du nouveau modèle de bruit ayant déclenché la transition, dans le canal fréquentiel i.

Lorsque les références sont élaborées à partir de coefficients spectraux de base compressés, en vue de gagner en temps de calcul, le procédé peut convertir les coefficients spectraux de base compressés en les coefficients spectraux de base compressés et pondérés en utilisant une table de conversion.

La table de conversion contient les coefficients spectraux de base non compressés obtenus par application de l'inverse de la fonction de compression aux coefficients de base compressés et le procédé comporte :

une détermination de l'opérateur de robustesse pour chacun des coefficients spectraux de base non compressés,
une pondération des coefficients spectraux de base non compressés,
une compression de coefficients spectraux de base non compressés et pondérés de manière à obtenir les coefficients spectraux de base compressés et pondérés.

Ce procédé s'applique avec des références formées d'une suite de trames temporelles correspondant à un ou plusieurs mots, cette suite de trames étant identifiée par une série de vecteurs de paramètres, ces paramètres étant obtenus par compression de coefficients spectraux.

Il s'applique également avec des références formées d'une suite de trames temporelles correspondant à un ou plusieurs phonèmes, cette suite de trames étant identifiée par le centre et l'écart type d'une ou plusieurs fonctions gaussiennes, ce centre et cet écart type dépendant des paramètres des vecteurs de paramètres des trames.

Pour une meilleure reconnaissance, une phase de débruitage des trames temporelles contenant de la parole peut prendre place avant la phase de paramétrisation.

La présente invention concerne également un système de reconnaissance vocale dans un signal acoustique bruité pour la mise en oeuvre du procédé. Il comprend :

des moyens pour acquérir le signal acoustique, le numériser et le découper en trames temporelles,
un chaîne de paramétrisation pour traduire les trames temporelles contenant de la parole en des vecteurs de paramètres dans le domaine fréquentiel,
des moyens de reconnaissance de formes avec un espace de références acquises lors d'un apprentissage, pour évaluer les vecteurs de paramètres issus de la chaîne de paramétrisation par rapport aux références, de manière à obtenir la reconnaissance par détermination d'une référence se rapprochant le plus des vecteurs de paramètres,
des moyens de modélisation du bruit pour élaborer de manière réitérative des modèles de bruit, un nouveau modèle de bruit remplaçant un modèle de bruit courant,
des moyens de détection d'une transition de bruit entre le nouveau modèle de bruit et le modèle de bruit courant,
des moyens pour adapter la chaîne de paramétrisation au bruit du nouveau modèle de bruit ayant déclenché la transition de bruit,
des moyens pour mettre à jour les références de l'espace de références en fonction du niveau de bruit du nouveau modèle de bruit ayant déclenché à la transition de bruit.

Les moyens pour mettre à jour les références de l'espace de références peuvent comporter un premier espace mémoire pour stocker les références mises à jour, ces références mises à jour devant remplacer des références courantes utilisées pour la reconnaissance de formes avant la détection de la transition de bruit, ces références courantes étant stockées dans un second espace mémoire.

Il peut aussi comporter un espace mémoire pour stocker des coefficients spectraux de base compressés obtenus à partir de coefficients spectraux de base associés chacun à un canal fréquentiel, ces coefficients spectraux de base traduisant chacun l'énergie spectrale d'une trame de base issue de l'apprentissage, une table de conversion pour convertir les coefficients spectraux de base compressés en des coefficients spectraux de base compressés et pondérés chacun par un opérateur de robustesse fonction du niveau de bruit du nouveau modèle de bruit ayant déclenché la transition de bruit et du coefficient spectral de base à pondérer, ces coefficients spectraux de base compressés et pondérés étant utilisés pour la mise à jour des références de l'espace de références.

Il est préférable qu'il comporte des moyens pour débruiter les trames temporelles contenant de la parole avant leur paramétrisation.

L'invention sera mieux comprise et d'autres caractéristiques et avantages apparaîtront à la lecture de la description qui suit en références aux figures annexées, parmi lesquelles :

- les figures 1a, 1b (déjà décrites) illustrent schématiquement, sous forme de bloc diagrammes deux systèmes de reconnaissance vocale connus, celui illustré à la figure 1b incluant un traitement de débruitage ;
- la figure 2 illustre un système de reconnaissance vocal pour la mise en oeuvre du procédé de reconnaissance vocale selon l'invention ;
- les figures 3a, 3b illustrent la détection de la transition de bruit ;
- la figure 4 illustre l'évolution de l'opérateur de robustesse en fonction des valeurs du coefficient spectral pour deux fonctions opératrices différentes ;
- la figure 5 illustre en détails un exemple de chaîne de paramétrisation du système de reconnaissance vocale selon l'invention ;
- la figure 6 illustre un exemple de mise à jour de l'espace de références du système de reconnaissance vocale selon l'invention ;
- la figure 7 est un graphique permettant de comparer le taux de reconnaissance vocale en fonction du niveau de bruit avec d'une part un système de reconnaissance vocale classique et d'autre part le système de reconnaissance vocale selon l'invention.

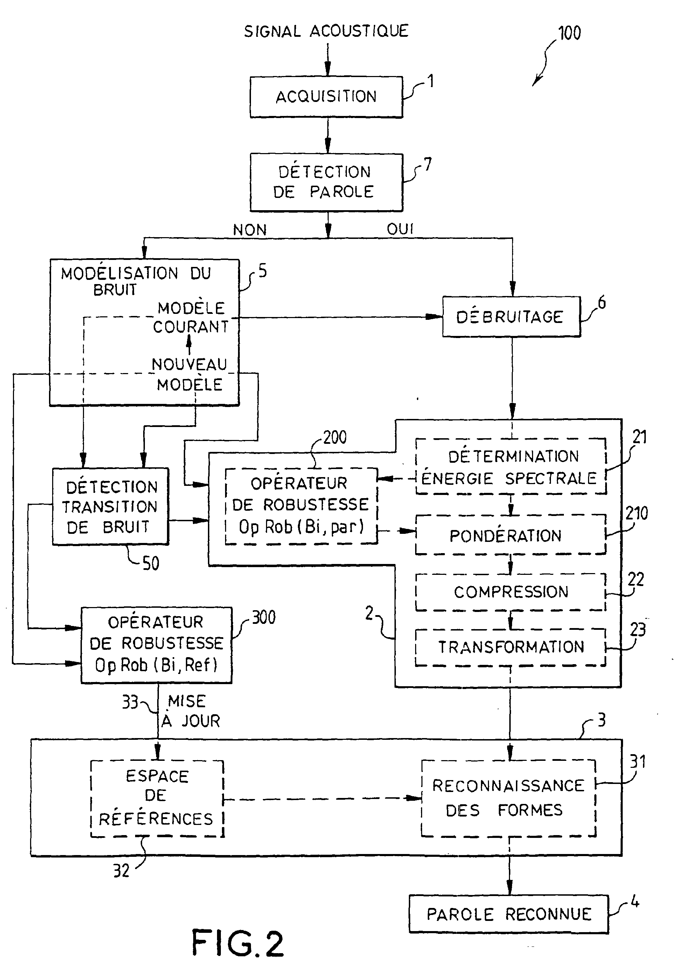

On se réfère à la figure 2 qui représente un exemple de système de reconnaissance vocale conforme à l'invention. Le système de reconnaissance vocale référencé 100 reçoit en entrée un signal acoustique temporel qui est formé, par moment au moins, d'un signal utile, la parole recherchée, auquel s'ajoute un signal de bruit, du bruit seul ou de la parole seule. On retrouve comme sur les figures 1a, 1b un bloc d'acquisition 1 qui reçoit le signal acoustique, le numérise par échantillonnage et le découpe en trames d'une pluralité d'échantillons. Un premier module 7 classique en soit reçoit les trames et discrimine dans leur signal acoustique le signal utile du signal de bruit. La discrimination entre parole et bruit est un traitement de signal classique et bien connu. Différentes méthodes sont connues et elles reposent sur les constations suivantes. Les bruits et la parole se superposent en terme d'énergie, de sorte qu'un signal acoustique contenant de la parole et du bruit ambiant contient plus d'énergie qu'un signal de bruit ambiant seul. Le bruit ambiant possède une énergie relativement stable et faible à court terme. La parole est le plus souvent précédée d'un bruit de respiration qui s'éteint quelques dizaines à centaines de millisecondes avant la première émission de parole, de sorte qu'on ne retrouve que le bruit ambiant seul juste avant l'émission de parole. Les spectres de certains phonèmes, notamment les phonèmes correspondant aux voyelles et à des consonnes voisées, possèdent une périodicité caractéristique.

Lorsque de la parole est détectée, les trames de signal utile contenant à la fois la parole à reconnaître et le bruit ambiant sont envoyées vers le module 2 de paramétrisation qui sera décrit ultérieurement. Avant de débuter la paramétrisation effective, on peut prévoir un traitement de débruitage illustré par le bloc 6 décrit ultérieurement. On trouve ensuite dans la chaîne de reconnaissance vocale le bloc 3 de reconnaissance de formes qui délivre de la parole reconnue 4, ce bloc de reconnaissance de formes inclut l'espace de références 32

En sortie du bloc de détection de parole 7, les trames de bruit seul sont isolées et envoyées à un module de modélisation du bruit 5. L'élaboration d'un modèle de bruit à partir d'un signal bruité est classique en soit. Un procédé de recherche réitérative de modèles de bruit tout particulièrement adapté aux applications principales visées par le système de reconnaissance vocale de l'invention est décrit dans la demande française FR-2 765 715.

Un modèle de bruit est formé de trames successives dont l'énergie est sensiblement la même et est inférieure à un seuil.

La recherche automatique et réitérative d'un modèle de bruit consiste à analyser les trames successives de manière à en trouver N successives dont les énergies sont proches les unes des autres. Pour cela on recherche si le rapport entre l'énergie de signal contenue dans une trame et l'énergie de signal contenue dans une trame voisine est situé à l'intérieur d'une gamme de valeurs déterminée. Lorsqu'une telle succession de trames a été trouvée, on stocke les valeurs numériques de tous les échantillons de ces trames. Cet ensemble de valeurs numériques constitue le modèle courant. L'analyse des trames continue pour trouver un nouveau modèle plus adapté, soit parce qu'il traduit mieux le bruit ambiant, soit parce que le bruit ambiant a évolué. Si on trouve au moins N autres trames successives répondant aux mêmes conditions de stabilité énergétique, on compare l'énergie moyenne de cette nouvelle succession de trames à l'énergie moyenne du modèle courant, et si le rapport entre l'énergie moyenne de la nouvelle succession et l'énergie moyenne du modèle courant est inférieur à un seuil de remplacement, de préférence légèrement supérieur à un, la nouvelle succession de trames constitue un nouveau modèle être stocké et qui va remplacer le modèle courant. L'énergie moyenne d'un modèle de bruit est égale à la somme des énergies des N trames qui le constituent divisée par N.

Si le bruit évolue lentement, l'évolution du bruit est prise en compte, par le remplacement des modèles du fait que le seuil de remplacement est supérieur à un. Mais si le bruit évolue rapidement dans le sens croissant, l'évolution risque de ne pas être pris en compte si on ne prévoit pas, de temps en temps, une ré-initialisation de la recherche d'un modèle de bruit. Par exemple, dans l'application des aéronefs, il ne faudrait pas que pendant le décollage le modèle de bruit reste figé sur ce qu'il était lorsque l'aéronef est à l'arrêt du fait qu'un modèle de bruit n'est remplacé que par un modèle moins énergétique. Une ré-initialisation simple consiste à remplacer de temps en temps un modèle courant par un nouveau modèle indépendamment de la comparaison des énergies moyennes du modèle courant et du nouveau modèle.

Comme dans l'art antérieur, le modèle courant sert dans la phase de débruitage illustrée au bloc 6. Ce bloc 6 reçoit le signal acoustique contenant le signal utile et le signal de bruit. Le débruitage peut se faire en travaillant sur les transformées de Fourrier du signal acoustique à débruiter. La transformée de Fourrier du signal acoustique à débruiter est effectuée trame par trame et fournit pour chaque trame des échantillons associés chacun à un canal fréquentiel. Ces échantillons sont filtrés de préférence dans un filtre de Wiener. Le filtre de Wiener possède autant de coefficients que de canaux fréquentiels. Chaque échantillon est multiplié par le coefficient respectif du filtre. Les coefficients sont calculés à partir de la densité spectrale du signal acoustique bruité et de la densité spectrale du modèle de bruit. Les échantillons d'une trame multipliés par le coefficient correspondant forment la trame débruitée.

Mais maintenant, la modélisation du bruit sert également pour adapter la paramétrisation au bruit et mettre à jour l'espace de références en fonction du bruit. Le bloc 50 permet d'identifier un changement dans le bruit ambiant qui justifie une mise à jour de l'espace de références et une modification de la chaîne de paramétrisation dès que de la parole est détectée. Dans le bloc 50 on détecte une transition de bruit entre le nouveau modèle de bruit et le modèle de bruit courant. La détection de la transition de bruit comporte une étape de recherche d'une incompatibilité énergétique et/ou spectrale entre le nouveau modèle de bruit et le modèle courant.

Une transition en énergie se produit lorsque le niveau général du bruit augmente ou baisse. Une transition en spectre se produit lorsque la forme du spectre change sans pour autant que l'énergie moyenne soit nécessairement sensiblement modifiée.

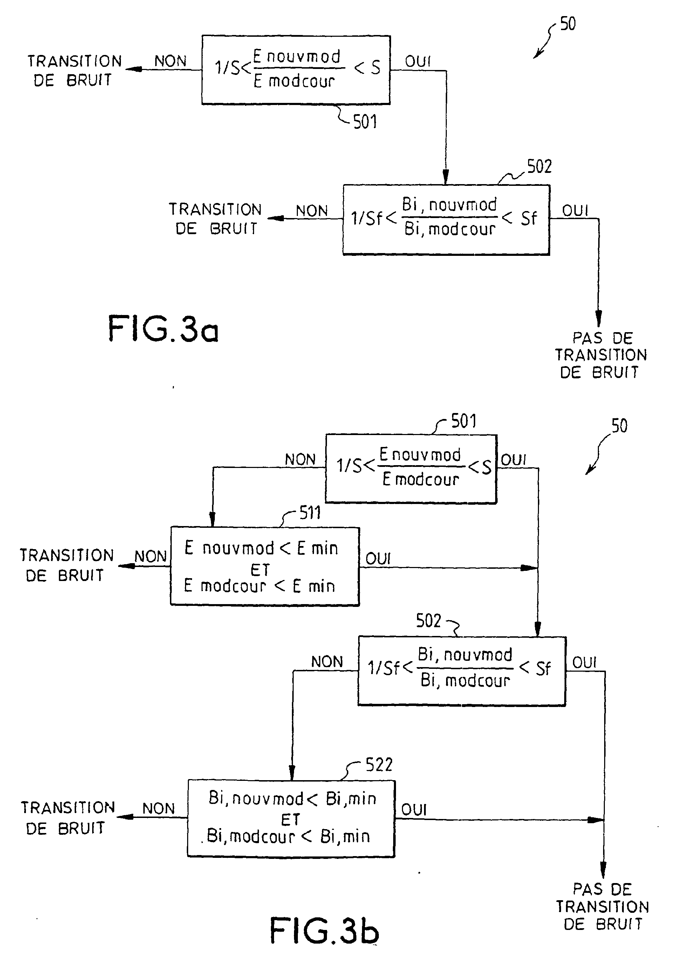

On se réfère à la figure 3a. Pour statuer sur l'incompatibilité énergétique au bloc 501, on compare l'énergie moyenne $E_{nouvmod}$ du nouveau modèle de bruit à l'énergie moyenne $E_{modcour}$ du modèle de bruit courant. Le modèle de bruit courant sert dans la paramétrisation en cours tant qu'une transition de bruit n'est détectée. On calcule le rapport entre les deux énergies moyennes $E_{nouvmod} / E_{modcour}$. La règle est la suivante : si ce rapport sort d'un intervalle borné par deux seuils S et S' dont l'un S est supérieur à un et l'autre S' est inférieur à un, il y a incompatibilité entre les deux modèles. Une transition de bruit est détectée. Les deux seuils S et S' seront de préférence inverses l'un de l'autre S' = 1/S, de fait la détermination d'un seul des deux suffit. Par exemple une valeur typique est S = 4 et donc S'= 0,25. La valeur du seuil permet de fixer la fréquence de détection des transitions et donc la fréquence de modification de la chaîne de paramétrisation et de mise à jour de l'espace de références. On cherche à éviter une fréquence trop grande qui imposerait un flux de mise à jour de l'espace de références incompatible avec la puissance de calcul à disposition. Si une incompatibilité énergétique est détectée, on va mettre à jour l'espace de références et adapter la paramétrisation au nouveau modèle de bruit qui a généré la transition de bruit. Cette adaptation et cette mise à jour seront expliquées ultérieurement.

Si aucune incompatibilité énergétique est détectée, on effectue une recherche d'incompatibilité spectrale au bloc 502. On aurait pu commencer par la recherche de l'incompatibilité spectrale, l'ordre n'a pas d'importance.

Pour statuer sur l'incompatibilité spectrale, on va passer dans le domaine fréquentiel, on compare pour chacun des canaux fréquentiels i (i entier compris entre 1 et Nb), le coefficient spectral $B_{i,nouvmod}$ associé au canal i du nouveau modèle de bruit au coefficient spectral $B_{i,modcour}$ associé au même canal du modèle de bruit courant. Chaque coefficient spectral traduit l'énergie spectrale de toutes les trames d'un modèle de bruit dans le canal fréquentiel considéré.

Pour obtenir les coefficients spectraux d'un modèle de bruit on applique une transformée de Fourier aux trames du modèle de bruit de manière à obtenir une répartition fréquentielle de l'amplitude des signaux de bruit de chacune des trames. On élève au carré cette amplitude de manière à obtenir le spectre d'énergie. On calcule ensuite le spectre moyen d'énergie du modèle en sommant, pour une même bande fréquentielle, les spectres d'énergie de toutes les trames et en divisant par le nombre N de trames du modèle. Pour tenir compte des particularités du système auditif humain, on applique au spectre moyen d'énergie Nb fenêtres de pondération, préférentiellement des fenêtres de Bark au nombre de seize, qui reproduisent la forme des filtres du système auditif humain de manière à obtenir les Nb coefficients spectraux recherchés.

Les caractéristiques des fenêtres de Bark sont bien connues dans l'état de l'art et il est inutile de les décrire plus avant. Pour plus de détails, on pourra se référer à l'ouvrage : «La parole et son traitement automatique», Calliope, Edition MASSON, 1989 et plus particulièrement à sa page 268.

On peut ajouter que les premières fenêtres, correspondant aux fréquences les plus basses, présentent un pic de forte amplitude et une bande passante étroite et que l'amplitude de celles de rang plus élevé décroît alors que leur bande passante s'élargit. De plus les fenêtres contiguës se recouvrent deux à deux.

On calcule, le rapport entre le ième (i entier compris entre 1 et Nb) coefficient spectral $B_{i,nouvmod}$ du nouveau modèle de bruit et le ième coefficient spectral $B_{i,modcour}$ du modèle de bruit courant Ces ièmes coefficients spectraux sont associés au canal fréquentiel i. La règle d'incompatibilité est la suivante : si ce rapport $B_{i,nouvmod}/B_{i,modcour}$ sort d'un intervalle borné par deux seuils Sf et Sf' dont l'un Sf est supérieur à un et l'autre Sf' est inférieur à un, il y a incompatibilité entre les deux modèles. Une transition de bruit est détectée. Les deux seuils Sf et Sf' seront de préférence inverses l'un de l'autre Sf' = 1/Sf, de fait la détermination d'un seul des deux suffit. Par exemple une valeur typique est Sf = 9 et donc Sf'= 1/9. De la même manière que précédemment, la valeur des seuils est adaptée pour minimiser les transitions qui ne seraient pas significatives.

Si aucune incompatibilité n'est détectée, les deux modèles sont compatibles, il n'y a pas de modification significative du bruit aucune mise à jour de l'espace de références et adaptation de la paramétrisation n'est à réaliser. Le nouveau modèle quant à lui remplace le modèle courant et il va servir pour le débruitage.

Si une incompatibilité spectrale entre modèles est détectée, on va mettre à jour l'espace de références et adapter la paramétrisation au nouveau modèle de bruit qui a généré la transition de bruit. Cette adaptation et cette mise à jour seront expliquées ultérieurement.

Il est toutefois préférable, toujours dans l'optique de réduire la fréquence des mises à jour, d'éviter de faire des mises à jour si le bruit du nouveau modèle et le bruit du modèle courant sont faibles, car dans cette situation ils gênent peu ou pas la reconnaissance vocale. On se réfère à la figure 3b.

On peut prévoir dans cette optique, lorsqu'une incompatibilité énergétique a été détectée, de comparer au bloc 511, l'énergie $E_{nouvmod}$ du nouveau modèle de bruit et celle $E_{modcour}$ du modèle de bruit courant à un seuil d'énergie $E_{min}$ plancher. Si les deux énergies $E_{nouvmod}$ et $E_{modcour}$ sont inférieures à ce seuil d'énergie $E_{min}$ plancher, on ignore l'incompatibilité entre modèles et on n'effectue ni mise à jour, ni adaptation. En effet, cela signifie que les énergies des deux modèles sont faibles et peu gênantes pour la reconnaissance vocale.

De la même manière, il est préférable de comparer au bloc 522, lorsqu'une incompatibilité spectrale a été détectée dans l'un des canaux fréquentiels i, le ième coefficient spectral $B_{i,nouvmod}$ du nouveau modèle de bruit et le ième coefficient spectral $B_{i,modcour}$ du modèle de bruit courant à un ième coefficient spectral $B_{i,min}$ plancher. Si les deux ièmes coefficients spectraux $B_{i,nouvmod}$ $B_{i,modcour}$ sont inférieurs à ce ième coefficient spectral $B_{i,min}$ plancher, on ignore l'incompatibilité entre modèles et on n'effectue ni mise à jour ni adaptation. En effet, cela signifie que les spectres des deux modèles sont faibles et peu gênants pour la reconnaissance vocale.

Puisque le procédé de reconnaissance vocale se déroule en temps réel, lorsqu'un nouveau modèle de bruit de rang n est détecté alors qu'une mise à jour est en cours, on recherche une incompatibilité entre le nouveau modèle de bruit de rang n et le modèle de bruit de rang n-1, devenu un modèle de bruit courant et qui a déclenché la mise à jour. Si aucune incompatibilité n'est trouvée, la mise à jour à partir du modèle de bruit courant de rang n-1 est confirmée et le nouveau modèle de bruit de rang n n'est pas pris en compte pour la mise à jour. Il devient nouveau modèle de bruit pour le débruitage. Si une incompatibilité est détectée, la mise à jour est annulée, la paramétrisation et l'espace de références conservent les configurations qu'elles possédaient avant la mise à jour et on continue la recherche itérative de nouveaux modèles de bruit.

On va voir maintenant comment s'effectue l'adaptation de la paramétrisation lorsqu'une transition de bruit a été détectée et que de la parole a été détectée. On va commencer par expliquer de manière plus détaillée comment fonctionne la chaîne de paramétrisation 2 en se référant à la figure 2. De manière classique, les trames numériques temporelles issues du bloc 6 de débruitage sont traitées de manière à passer dans le domaine fréquentiel. On détermine dans le premier bloc 21, pour chaque trame de signal utile son énergie spectrale dans un certain nombre de bandes fréquentielles. Pour cela on applique une transformée de Fourier aux trames de manière à obtenir une répartition fréquentielle de l'amplitude des signaux de chacune des trames. On élève au carré cette amplitude de manière à obtenir le spectre d'énergie.

Pour tenir compte des particularités du système auditif humain, on applique au spectre d'énergie Nb fenêtres de pondération, préférentiellement des fenêtres de Bark au nombre de seize, qui reproduisent la forme des filtres du système auditif humain de manière à obtenir les Nb coefficients spectraux recherchés $B_{i,par}$ avec i entier compris entre 1 et Nb. Ce sont ces coefficients spectraux que délivre le bloc 21.

L'adaptation de la chaîne de paramétrisation 2 se fait en calculant pour chaque ième coefficient spectral $B_{i,par}$ d'une trame de signal utile un opérateur de robustesse $OpRob(B_{i,par})$ de rang i ayant une fonction de pondération. Le bloc 200 illustre la détermination de l'opérateur de robustesse $OpRob(B_{i,par})$ de rang i.

C'est un facteur compris entre zéro et un dont la fonction est de traduire la confiance accordée à un coefficient spectral de la trame par rapport au niveau de bruit ayant déclenché la transition. Dans un même canal fréquentiel i, plus la valeur du ième coefficient spectral d'une trame de signal utile est proche de la valeur du ième coefficient spectral du modèle de bruit ayant déclenché la transition, plus la valeur de l'opérateur de robustesse de rang i se rapproche de un.

Les données qui interviennent dans la détermination de l'opérateur de robustesse à appliquer sont donc: la valeur du ième coefficient spectral d'une trame de signal utile et le niveau du bruit dans le canal fréquentiel i du nouveau modèle de bruit ayant déclenché la transition de bruit. A titre illustratif, l'opérateur de robustesse peut être donné par la relation suivante :

$$OpRob\left(B_{i,par}\right) = \left\{ \max\left( 0{,}25 + \frac{B_{i,par} - P\left(B_{i,nouvmod}\right)}{B_{i,par} + 2P\left(B_{i,nouvmod}\right)},\ 0 \right) \right\}^{2}$$

.

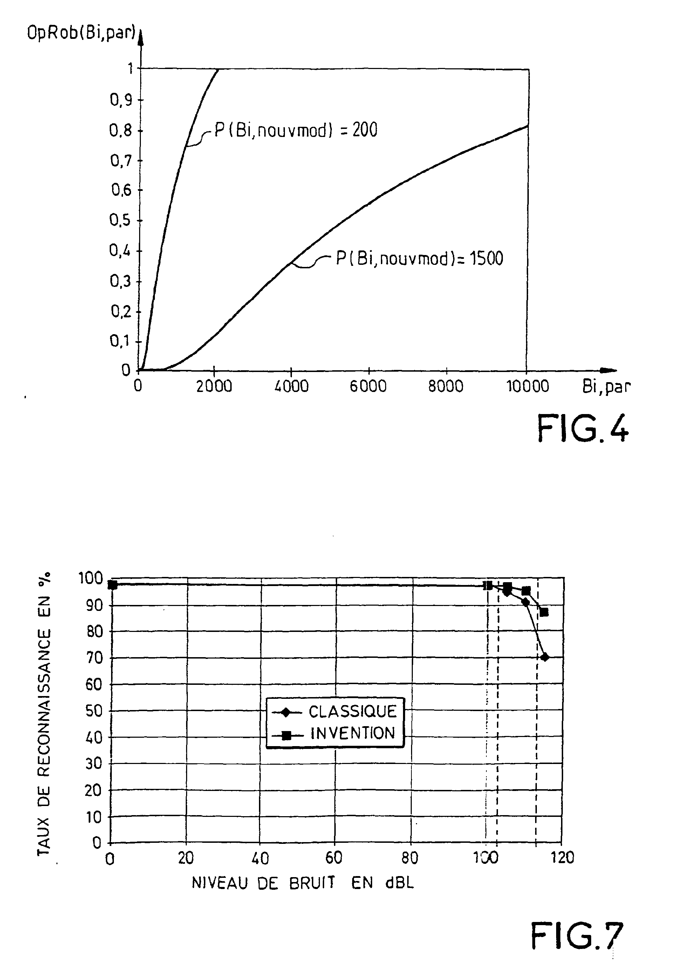

avec $B_{i,par}$ ième coefficient spectral d'une trame de signal utile, $P(B_{i,nouvmod})$ paramètre dépendant du niveau de bruit du nouveau modèle de bruit ayant déclenché la transition, dans le canal fréquentiel i considéré. Ce paramètre gouverne la forme de la fonction régissant l'opérateur de robustesse et il varie comme le ième coefficient spectral $B_{i,nouvmod}$ du modèle de bruit ayant déclenché la transition. Plus $P(B_{i,nouvmod})$ est grand plus l'opérateur de robustesse se rapproche de zéro sur une longue période. On peut se reporter à la figure 4 qui montre l'évolution de l'opérateur de robustesse de rang i en fonction du ième coefficient spectral d'une trame de signal utile avec un paramètre $P(B_{i,nouvmod})$ valant soit 200 soit 1500. Pour $P(B_{i,nouvmod})$ égal à 1500, l'opérateur de robustesse reste à zéro tant que le coefficient spectral n'a pas atteint environ 1000 alors que pour $P(B_{i,nouvmod})$ égal à 200, l'opérateur de robustesse commence à croître dès que le coefficient spectral dépasse environ 100.

Un exemple de dépendance pertinent pour le paramètre $P(B_{i,nouvmod})$ est de lui donner la valeur du ième coefficient spectral $B_{i,nouvmod}$ du nouveau modèle de bruit ayant déclenché la transition.

On applique ensuite dans le bloc 210, un opérateur de robustesse $OpRob(B_{i,par})$ ainsi calculé à chacun des Nb coefficients spectraux $B_{i,par}$ issus du bloc 21 de manière à les pondérer. Dans le bloc 22 les Nb coefficients spectraux pondérés par l'opérateur de robustesse subissent une compression pour tenir compte du comportement du système auditif humain. De manière classique, cette compression peut être une compression logarithmique et plus particulièrement une compression Qlog. Cette fonction Qlog prend la valeur zéro à l'origine au lieu de moins l'infini pour une fonction logarithmique pure, et a un comportement logarithmique pour des abscisses supérieures à zéro. D'autres choix sont bien sur possibles.

Les Nb coefficients spectraux pondérés ainsi compressés sont ensuite transformés dans le bloc 23. Une transformée en cosinus discrète peut être utilisée par exemple. Le résultat de la transformation permet d'obtenir pour chaque trame de signal utile les paramètres du vecteur de paramètres recherché. Une certaine sélection peut se faire car certains coefficients spectraux pondérés après transformation ne sont pas significatifs. On choisit en général de ne conserver que huit paramètres qui correspondent aux rangs 2 à 9. Le vecteur de paramètres est représentatif du signal acoustique de la trame.

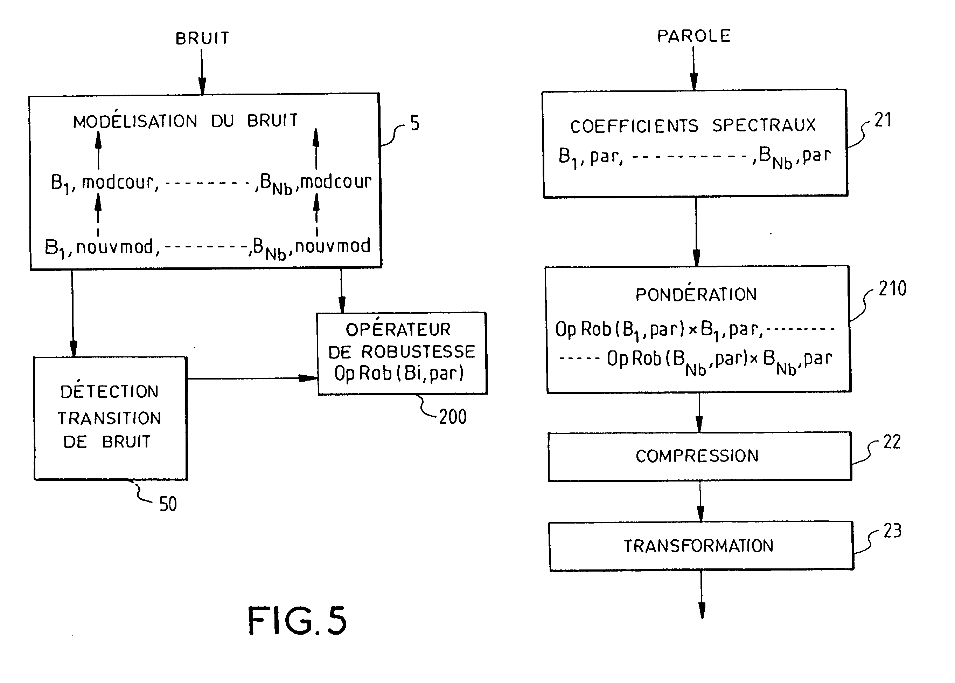

La figure 5 montre sous forme de blocs la chaîne de paramétrisation dans le procédé de reconnaissance vocale de l'invention. Son niveau de robustesse est adaptée au bruit.

Il faut que l'espace de références soit mis à jour pour que la phase de reconnaissance de formes s'effectue de manière cohérente entre les vecteurs de paramètres adaptés au bruit et les références modifiées en conséquence.

On revient à la figure 2. La mise à jour de l'espace de références se fait dès lors qu'une transition de bruit a été détectée. Cette phase 33 de mise à jour qui peut durer quelques secondes, doit perturber le moins possible le procédé de reconnaissance vocale. On cherche à ce que cette phase de mise à jour soit transparente pour l'utilisateur du système de reconnaissance vocale.

Dans l'exemple décrit, on suppose que les références de l'espace de références traduisent le contenu de commandes c'est dire des mots ou des phrases et qu'elles sont matérialisées par des séries de vecteurs de paramètres de base correspondant à des suites de trames de base. Chaque mot peut être décrit par une ou plusieurs références en fonction de la prononciation du ou des locuteurs. L'espace de références 32 peut contenir des milliers de références.

La reconnaissance de formes se fait par évaluation d'une série de vecteurs de paramètres, issue de la paramétrisation, correspondant à l'empreinte acoustique d'une commande analysée à reconnaître vis à vis d'une série de vecteurs de paramètres de base obtenus lors de la phase d'apprentissage, cette série correspondant à l'empreinte acoustique d'une commande de base. De cette évaluation, on déduit une distance entre la commande analysée et la commande de référence. La commande de référence présentant la distance la plus courte avec la commande analysée représente la commande à reconnaître.

Pour réaliser cette phase de reconnaissance de formes, on utilise un algorithme par exemple de type DTW.

Puisque la reconnaissance de formes s'effectue par comparaison entre vecteurs de paramètres, on doit avoir à disposition ces vecteurs de paramètres de base. On les obtient de la même manière que pour les trames de signal utile, en calculant pour chaque trame de base son énergie spectrale dans un certain nombre Nb de canaux fréquentiels et en utilisant des fenêtres de pondération. Les valeurs d'énergie obtenues sont les Nb coefficients spectraux $B_{i,bas}$ de base recherchés avec i entier compris entre 1 et Nb. Après détection d'une transition de bruit, pour mettre à jour l'espace de références, on calcule, dans le bloc 300, un opérateur de robustesse $OpRob(B_{i,bas})$ de rang i pour chaque ième coefficient spectral $B_{i,bas}$ de base. Comme précédemment la fonction de cet opérateur est de pondérer le paramètre en fonction de sa valeur et du niveau de bruit du modèle de bruit ayant déclenché la mise à jour dans la canal fréquentiel considéré. A titre illustratif, l'opérateur de robustesse peut être donné par la relation suivante :

$$OpRob(B_{i,bas}) = \left\{ \max\left( 0,25 + \frac{B_{i,bas} - P(B_{i,nouvmod})}{B_{i,bas} + 2P(B_{i,nouvmod})}, 0 \right) \right\}^2$$

avec $B_{i,bas}$ ième coefficient spectral de base d'une trame de base de références, $P(B_{i,nouvmod})$ paramètre dépendant du niveau de bruit ayant déclenché la transition, dans le canal fréquentiel i considéré.

Comme précédemment, un exemple de dépendance pertinent pour le paramètre $P(B_{i,nouvmod})$ est de lui donner à la valeur du ième coefficient spectral $B_{i,nouvmod}$ du nouveau modèle de bruit ayant déclenché la transition.

On applique un tel opérateur aux Nb coefficients spectraux de base de toutes les références de manière à obtenir les coefficients spectraux de base pondérés. Le nombre de valeurs possibles pour les coefficients spectraux de base est beaucoup plus faible que le nombre de références. Pour l'application des aéronefs, il est de l'ordre de 300.

Les coefficients spectraux de base pondérés sont ensuite compressés, par exemple comme précédemment avec la fonction Qlog. Les coefficients spectraux de base pondérés ainsi compressés sont ensuite transformés. Une transformée en cosinus discrète peut être utilisée par exemple. Le résultat de la transformation permet d'obtenir pour chaque trame son vecteur de paramètres adapté au bruit. Ces vecteurs de paramètres mis à jour contribuent à la mise à jours des références.

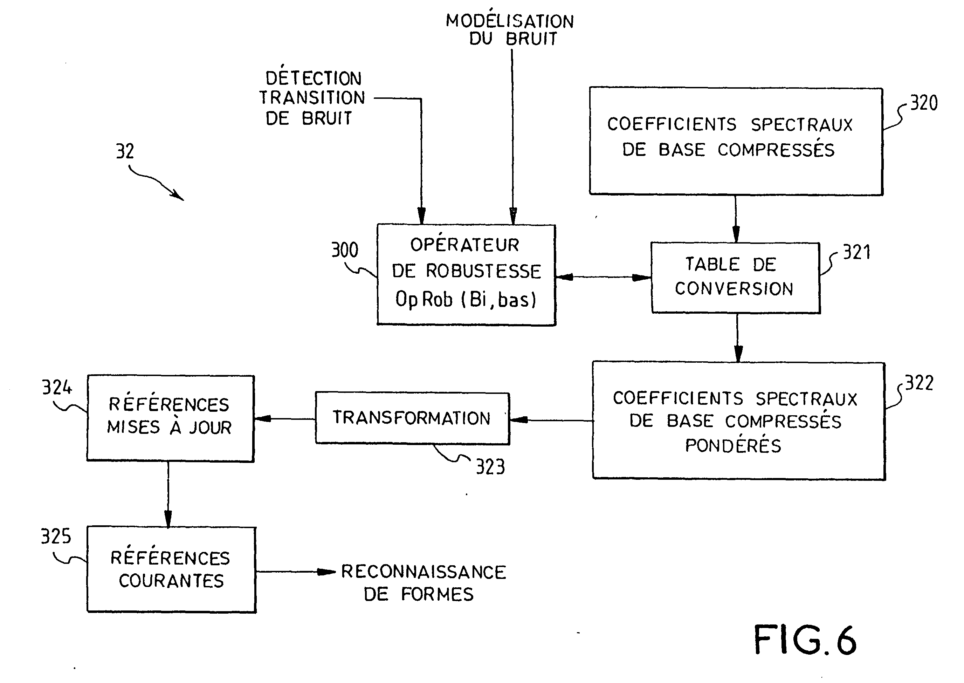

On prévoit un premier espace mémoire pour stocker les références mises à jour et un second espace mémoire pour stocker les références courantes comme on l'expliquera ultérieurement lors de la description de la figure 6 qui illustre une variante de mise à jour de l'espace de références.

Pour optimiser la rapidité de la mise à jour de l'espace de références, on peut être amené à effectuer simultanément la pondération des coefficients spectraux des références par l'opérateur de robustesse et la compression des coefficients spectraux pondérés.

On se réfère à la figure 6. Dans une zone mémoire 320 de l'espace de références 32, on conserve à l'issu de la phase d'apprentissage préalable, un ensemble de coefficients spectraux de base compressés. Ils sont obtenus à partir de la phase d'apprentissage et sont issus de toutes les commandes possibles dans l'application considérée. Cet ensemble reste figé au cours des différents mises à jour. Le nombre de valeurs possibles pour les coefficients spectraux de base compressés est petit de l'ordre de 300 par exemple dans l'application des aéronefs.

On prévoit une table de conversion 321 qui permet de passer de l'ensemble des coefficients spectraux de base compressés à un ensemble de coefficients spectraux de base compressés pondérés par l'opérateur de robustesse. Elle contient, pour la plage de valeurs de l'ensemble des coefficients spectraux compressés possibles de la zone 320, son inverse par application de l'inverse de la fonction de compression ce qui forme un ensemble de coefficients spectraux de base. Cet ensemble de coefficients spectraux de base non compressé est également figé au cours des différentes mises à jour.

Pour chaque ième coefficient spectral de base non compressé de l'ensemble, on peut calculer dans le bloc 300 l'opérateur de robustesse de rang i en fonction du nouveau modèle de bruit ayant engendré la transition de bruit et du coefficient spectral de base. On pondère, dans la table de conversion 321, les coefficients spectraux non compressés de l'ensemble avec les opérateurs de robustesse calculés et on effectue une compression pour obtenir un ensemble de coefficients spectraux compressés et pondérés, c'est à dire mis à jour. Cet ensemble est stocké dans un espace mémoire 322.

A partir de cet ensemble de coefficients spectraux compressés et mis à jour, on va pouvoir effectuer la transformation 323 pour obtenir les paramètres des vecteurs de paramètres et les références mises à jour de l'espace de références 32. Elles sont stockées dans une zone mémoire 324. Elles correspondent dans cet exemple à des suites de trames et donc à des suites de vecteurs de paramètres.

Initialement les références de base issues de l'apprentissage sont stockées dans une zone mémoire 325 elles forment les références courantes et servent dans la phase de reconnaissance de formes tant qu'une transition de bruit n'est pas détectée et qu'une mise à jour n'est pas effectuée. Dès qu'une mise à jour est terminée, les références courantes sont remplacées par les références mises à jour. Elles servent dans la phase de reconnaissance de formes tant qu'elles ne sont pas remplacées par de nouvelles références mises à jour.

Si un signal de parole intervient pendant la phase mise à jour de l'espace de références, la phase de reconnaissance de formes se fait avec les références courantes qui sont toujours disponibles et la mise à jour est suspendue. Le traitement de mise à jour ne retarde donc pas la reconnaissance vocale. Avec une architecture de processeur moderne par exemple de type « power PC. 750 » la mise à jour de l'espace de références prend moins de 10 secondes.

Avec une syntaxe d'environ 120 mots et d'un million de phrases à reconnaître possibles, les comparaisons effectuées entre un système de reconnaissance vocale classique tel que celui de la figure 1b et le système conforme à l'invention permettent de tracer les graphiques illustrés à la figure 7. On suppose que l'application est celle de la cabine d'un aéronef dans laquelle les locuteurs sont équipés de casques et masques. En abscisse se trouve le niveau de bruit ambiant en dBL et en ordonnée le taux de reconnaissance vocale. La plage de bruit repérée entre les lignes pointillées correspond au bruit en vol. On peut déduire de ces graphiques que le système de reconnaissance vocale selon l'invention permet de diviser par deux le taux d'erreur dans les environnements les plus fortement bruités.

La description qui vient d'être faite pour la mise à jour de l'espace de références se basait sur un espace de références adapté à une reconnaissance de formes par calcul de distance minimale. Le procédé selon l'invention s'applique également à une phase de reconnaissance de formes qui utilise les probabilités. La phase de reconnaissance de formes utilise alors un algorithme par exemple de type HMM. Il y a une légère différence car les références sont des fonctions gaussiennes associées chacune à un phonème et non des séries de vecteurs de paramètres. Ces fonctions gaussiennes sont caractérisées par leur centre et leur écart-type. Ce centre et cet écart type dépendent des paramètres de toutes les trames du phonème, c'est à dire des coefficients spectraux compressés de toutes les trames du phonème.

La mise à jour se fait toujours en appliquant un opérateur de robustesse de rang i à chaque ième coefficient spectral de base d'une trame de base provenant de l'apprentissage. A partir des coefficients spectraux de base pondérés et compressés, on peut élaborer les centres et écarts types des fonctions gaussiennes mises à jour et donc les références mises à jour. La variante illustrée à la figure 6 s'applique également moyennant une transformation appropriée pour passer des coefficients spectraux de base compressés et pondérés aux références mises à jour.

A la lecture de ce qui précède, on constate que le système de reconnaissance vocale qui vient d'être décrit fonctionne de manière optimale dans toutes les conditions de bruit grâce à la présence de l'opérateur de robustesse. Il est donc opérationnel aussi bien en ambiance de laboratoire que dans une voiture ou un aéronef. C'est un système autonome et pluri-applications.

En mettant en oeuvre le traitement spectral du bruit, puisque l'opérateur de robustesse associé à un canal fréquentiel dans lequel le bruit est fort sera différent de l'opérateur de robustesse associé à un canal fréquentiel dans lequel le bruit est faible, on obtient une robustesse et une sensibilité optimales quel que soit l'environnement sonore. Les canaux fréquentiels dans lesquels le bruit est très fort auront du fait de la pondération une importance minimisée dans la détermination des paramètres.

Pour l'utilisateur, la mise en place du système n'entraîne aucune charge supplémentaire. La phase d'apprentissage n'est pas modifiée par rapport à ce qui se faisait avant vue de l'utilisateur. On garde juste en mémoire les coefficients spectraux de base ou les coefficients spectraux de base compressés si l'on emploie la variante permettant d'accélérer la mise à jour.

En phase de reconnaissance, la phase de détection de transition et la phase de mise à jour de l'espace de références sont effectuées en l'absence de parole à reconnaître quand le processeur est inoccupé. Si de la parole intervient pendant une mise à jour, on interrompt la mise à jour. Ces traitements n'augmentent pas le temps de réponse du système.

La seule contrainte imposée par la mise en oeuvre du procédé est de nécessiter plus d'espace mémoire pour stocker les coefficients spectraux de base qu'ils soient compressés ou non d'une part et d'autre part pour stocker les références : les références courantes mais aussi les références mises à jour. Dans l'art antérieur un seul espace mémoire suffisait pour les références. Ces contraintes sont bien limitées.

## Revendications

1. Procédé de reconnaissance vocale dans un signal acoustique bruité comprenant :

   une phase (1) de numérisation et de découpage en une suite de trames temporelles du signal acoustique bruité,
   une phase (2) de paramétrisation de trames temporelles contenant de la parole de manière à obtenir, par trame, un vecteur de paramètres dans le domaine fréquentiel, ce vecteur de paramètres traduisant le contenu acoustique de la trame,
   une phase (3) de reconnaissance de formes dans laquelle on évalue les vecteurs de paramètres par rapport à des références préenregistrées dans un espace de références, lors d'une phase d'apprentissage préalable, de manière à obtenir la reconnaissance par détermination d'au moins une référence la plus proche des vecteurs de paramètres,
   une phase de détection de parole (7), pendant laquelle les trames de bruit seules sont isolées,
   une phase (5) de recherche réitérative, de modèles de bruit successifs dans la suite des trames temporelles, un nouveau modèle de bruit remplaçant un modèle de bruit courant, un modèle de bruit comportant plusieurs trames successives,
   **caractérisé en ce qu'**il comporte
   une phase (50) de recherche d'une transition de bruit entre le nouveau modèle de bruit et le modèle courant, ladite phase de recherche de transition comportant une étape de recherche d'une incompatibilité énergétique et/ou une étape de recherche d'une incompatibilité spectrale entre le nouveau modèle de bruit et le modèle courant, la détection d'une incompatibilité traduisant une transition de bruit,
   et lorsqu'une transition de bruit a été détectée, **en ce qu'**il comporte une phase (33) de mise à jour de l'espace de références (32) en fonction du nouveau modèle de bruit, la phase de paramétrisation (2) incluant une étape d'adaptation (200, 210) des paramètres au nouveau modèle de bruit.

2. Procédé de reconnaissance vocale selon la revendication 1, **caractérisé en ce que** l'étape de recherche d'une incompatibilité énergétique comporte la comparaison du rapport entre l'énergie ($E_{nouvmod}$) moyenne du nouveau modèle de bruit et l'énergie ($E_{modcour}$) moyenne du modèle de bruit courant avec un seuil bas (S') et un seuil haut (S), une incompatibilité énergétique étant trouvée si le rapport se place à l'extérieur de l'intervalle borné par les deux seuils (S, S').

3. Procédé de reconnaissance vocale selon la revendication 2, **caractérisé en ce que** l'étape de recherche d'une incompatibilité énergétique comporte également une comparaison de l'énergie ($E_{nouvmod}$) moyenne du nouveau modèle de bruit et de l'énergie ($E_{modcour}$) moyenne du modèle de bruit courant à seuil ($E_{min}$) d'énergie plancher au-dessous duquel le bruit est négligeable, l'incompatibilité énergétique déterminée par la comparaison du rapport entre l'énergie ($E_{nouvmod}$) moyenne du nouveau modèle de bruit et l'énergie ($E_{modcour}$) moyenne du modèle de bruit courant étant ignorée lorsque l'énergie ($E_{nouvmod}$) moyenne du nouveau modèle de bruit et l'énergie ($E_{modcour}$) moyenne du modèle de bruit courant sont toutes deux inférieures au seuil ($E_{min}$) d'énergie plancher.

**4.** Procédé de reconnaissance vocale selon l'une des revendications 1 à 3, **caractérisé en ce que** l'étape de recherche d'une incompatibilité spectrale comporte, à partir de coefficients spectraux ($B_{i,modcour}$ , $B_{i,nouvmod}$) traduisant respectivement l'énergie spectrale des trames du modèle de bruit courant et l'énergie spectrale des trames du nouveau modèle de bruit dans au moins un canal fréquentiel (i), une comparaison du rapport entre le coefficient spectral ($B_{i,nouvmod}$) associé au canal fréquentiel (i) du nouveau modèle de bruit et le coefficient spectral ($B_{i,modcour}$) associé au même canal fréquentiel (i) du modèle de bruit courant avec un seuil bas (Sf') et un seuil haut (Sf), une incompatibilité spectrale étant trouvée si le rapport se place à l'extérieur de l'intervalle borné par les deux seuils (Sf, Sf').

**5.** Procédé de reconnaissance vocale selon la revendication 4, **caractérisé en ce que** l'étape de recherche d'une incompatibilité spectrale comporte également, pour au moins un canal fréquentiel (i), une comparaison du coefficient spectral ($B_{i,nouvmod}$) du nouveau modèle de bruit dans ce canal fréquentiel (i) et du coefficient spectral ($B_{i,modcour}$) du modèle de bruit courant dans ce canal fréquentiel (i) à un coefficient spectral plancher ($B_{i,min}$) associé à ce canal fréquentiel (i), plancher au-dessous duquel le bruit est négligeable, une incompatibilité spectrale déterminée par la comparaison du rapport entre coefficients spectraux étant ignorée lorsque, pour ce canal fréquentiel (i), les coefficients spectraux du nouveau modèle et du modèle courant sont tous deux inférieurs au coefficient spectral plancher ($B_{i,min}$).

**6.** Procédé de reconnaissance vocale selon l'une des revendications 1 à 5, **caractérisé en ce que** la phase (2) de paramétrisation comporte une étape de détermination de coefficients spectraux ($B_{i, par}$) associés chacun à un canal fréquentiel (i) traduisant chacun une représentation de l'énergie spectrale d'une trame contenant de la parole dans le canal fréquentiel (i), l'étape (200, 210) d'adaptation du jeu de paramètres comportant une détermination, pour chaque coefficient spectral ($B_{i, par}$), d'un opérateur de robustesse (OpRob($B_{i, par}$)), cet opérateur de robustesse traduisant la confiance à accorder au coefficient spectral ($B_{i, par}$) par rapport au niveau de bruit du nouveau modèle de bruit dans le même canal fréquentiel (i), une pondération du coefficient spectral ($B_{i, par}$) avec l'opérateur de robustesse (OpRob($B_{i, par}$)),
une détermination du vecteur de paramètres à partir des coefficients spectraux pondérés.

**7.** Procédé selon la revendication 6, **caractérisé en ce que** l'opérateur de robustesse (OpRob($B_{i,par}$)) vérifie la relation suivante :

$$OpRob(B_{i,par}) = \left\{ \max\left( 0{,}25 + \frac{B_{i,par} - P(B_{i,nouvmod})}{B_{i,par} + 2P(B_{i,nouvmod})}, 0 \right) \right\}^2$$

$B_{i,par}$ étant le coefficient spectral et P($B_{i,nouvmod}$) un paramètre dépendant du niveau de bruit du nouveau modèle de bruit ayant déclenché la transition, dans le canal fréquentiel (i).

**8.** Procédé selon l'une des revendications 1 à 7, **caractérisé en ce que** la phase (33) de mise à jour de l'espace de références (32) comporte à partir de coefficients spectraux de base associés chacun à un canal fréquentiel (i), traduisant chacun l'énergie spectrale d'une trame de base obtenue lors de la phase d'apprentissage, la détermination d'un opérateur de robustesse (OpRob($B_{i,bas}$)) pour chaque coefficient spectral ($B_{i,bas}$) de base, cet opérateur de robustesse traduisant la confiance à accorder au coefficient spectral ($B_{i, bas}$) par rapport au niveau de bruit du nouveau modèle de bruit dans le même canal fréquentiel (i),
la pondération des coefficients spectraux ($B_{i,bas}$) de base avec les opérateurs de robustesse (OpRob($B_{i,bas}$)) respectifs ,
l'élaboration des références mises à jour avec les coefficients spectraux pondérés.

**9.** Procédé selon la revendication 8, **caractérisé en ce que** l'opérateur de robustesse (OpRob($B_{i,bas}$)) vérifie la relation suivante :

$$OpRob(B_{i,bas}) = \left\{ \max\left( 0{,}25 + \frac{B_{i,bas} - P(B_{i,nouvmod})}{B_{i,bas} + 2P(B_{i,nouvmod})}, 0 \right) \right\}^2$$

$B_{i,bas}$ étant le coefficient spectral de base et P($B_{i,nouvmod}$) un paramètre dépendant du niveau de bruit du nouveau modèle de bruit ayant déclenché la transition, dans le canal fréquentiel (i).

10. Procédé selon l'une des revendications 8 ou 9, dans lequel les références sont élaborées à partir de coefficients spectraux de base compressés, **caractérisé en ce qu'**il utilise une table de conversion (321) pour convertir les coefficients spectraux de base compressés en les coefficients spectraux de base compressés et pondérés.

11. Procédé selon la revendication 10, **caractérisé en ce que** la table de conversion (321) contient les coefficients spectraux de base ($B_{i,bas}$) non compressés obtenus par application de l'inverse de la fonction de compression aux coefficients de base compressés et **en ce qu'**il comporte
une détermination des opérateurs de robustesse ($OpRob(B_{i,bas})$) pour chacun des coefficients spectraux de base ($B_{i,bas}$) non compressés ,
une pondération des coefficients spectraux de base ($B_{i,bas}$) non compressés,
une compression de coefficients spectraux de base non compressés et pondérés de manière à obtenir les coefficients spectraux de base compressés et pondérés.

12. Procédé selon l'une des revendications 1 à 11, **caractérisé en ce qu'**il utilise comme références une suite de trames temporelles correspondant à un ou plusieurs mots, cette suite de trames étant identifiée par une série de vecteurs de paramètres, ces paramètres étant obtenus par compression de coefficients spectraux.

13. Procédé selon l'une des revendications 1 à 12, **caractérisé en ce qu'**il utilise comme références une suite de trames temporelles correspondant à un ou plusieurs phonèmes, cette suite de trames étant identifiée par le centre et l'écart type d'une fonction gaussienne, ce centre et cet écart type dépendant des paramètres des vecteurs de paramètres des trames.

14. Procédé selon l'une des revendications 1 à 13, **caractérisé en ce qu'**il comporte une phase (6) de débruitage des trames temporelles contenant de la parole avant la phase (2) de paramétrisation.

15. Système de reconnaissance vocale dans un signal acoustique bruité pour la mise en oeuvre du procédé selon l'une des revendications 1 à 14, **caractérisé en ce qu'**il comprend :

des moyens (1) pour acquérir le signal acoustique le numériser et le découper en trames temporelles,
une chaîne de paramétrisation (2) pour traduire les trames temporelles contenant de la parole en des vecteurs de paramètres dans le domaine fréquentiel,
des moyens de reconnaissance de formes (3) avec un espace (32) de références acquises lors d'un apprentissage, pour comparer les vecteurs de paramètres issus de la chaîne de paramétrisation aux références, de manière à obtenir la reconnaissance par détermination d'une référence se rapprochant le plus des vecteurs de paramètres, des moyens de détection de parole (7), pendant laquelle les trames de bruit seules sont isolées, des moyens (5) de modélisation du bruit pour élaborer de manière réitérative des modèles de bruit, un nouveau modèle de bruit remplaçant un modèle de bruit courant,
des moyens (50) de détection d'une transition de bruit entre le nouveau modèle de bruit et le modèle de bruit courant,
des moyens (200,210) pour adapter la chaîne de paramétrisation au bruit du nouveau modèle de bruit ayant déclenché la transition de bruit,
des moyens (33) pour mettre à jour les références de l'espace de références (32) en fonction du niveau de bruit du nouveau modèle de bruit ayant déclenché à la transition de bruit.

16. Système de reconnaissance vocale selon la revendication 15, **caractérisé en ce que** les moyens (33) pour mettre à jour les références de l'espace de références (32) comportent un premier espace mémoire (324) pour stocker les références mises à jour, ces références mises à jour devant remplacer des références courantes utilisées pour la reconnaissance de formes avant la détection de la transition de bruit, ces références courantes étant stockées dans un second espace mémoire (325).

17. Système de reconnaissance vocale selon l'une des revendications 15 ou 16, **caractérisé en ce qu'**il comporte un espace mémoire (320) pour stocker des coefficients spectraux de base compressés obtenus à partir de coefficients spectraux de base associés chacun à un canal fréquentiel (i), ces coefficients spectraux de base traduisant chacun l'énergie spectrale d'une trame de base issue de l'apprentissage, une table de conversion (321) pour convertir les coefficients spectraux de base compressés en des coefficients spectraux de base compressés, pondérés chacun par un opérateur de robustesse ($OpRob(B_{i,bas})$) fonction du niveau de bruit du nouveau modèle de bruit ayant déclenché la transition et du coefficient spectral ($B_{i,bas}$) de base à pondérer, ces coefficients spectraux de base compressés et pondérés étant utilisés pour la mise à jour des références de l'espace de références.

18. Système de reconnaissance vocale selon l'une des revendications 15 ou 16, **caractérisé en ce qu'**il comporte des moyens (6) pour débruiter les trames temporelles contenant de la parole avant leur paramétrisation.

**Claims**

1. Method of speech recognition in a noisy acoustic signal comprising:

   a phase (1) of digitization and of splitting into a series of time frames of the noisy acoustic signal,
   a phase (2) of parametrization of time frames containing the speech in such a way as to obtain, per frame, a vector of parameters in the frequency domain, this vector of parameters manifesting the acoustic content of the frame,
   a phase (3) of recognition of shapes, in which the vectors of parameters are evaluated with respect to references prerecorded in a reference space, during a prior learning phase, so as to obtain the recognition by determination of at least one reference which is closest to the vectors of parameters,
   a phase of speech detection (7), during which the noise frames alone are isolated,
   a phase (5) of repeated searching for successive noise models in the series of time frames, a new noise model replacing a current noise model, a noise model comprising several successive frames,
   **characterized in that** it comprises
   a phase (50) of searching for a noise transition between the new noise model and the current model, the said transition search phase comprising a step of searching for an energy incompatibility and/or a step of searching for a spectral incompatibility between the new noise model and the current model, the detection of an incompatibility manifesting a noise transition,
   and when a noise transition has been detected, **in that** it comprises a phase (33) of updating the reference space (32) as a function of the new noise model, the parametrization phase (2) including a step of adaptation (200, 210) of the parameters to the new noise model.

2. Method of speech recognition according to Claim 1, **characterized in that** the step of searching for an energy incompatibility comprises the comparison of the ratio of the mean energy ($E_{newmod}$) of the new noise model to the mean energy ($E_{curmod}$) of the current noise model with a low threshold (S') and a high threshold (S), an energy incompatibility being found if the ratio lies outside the interval bounded by the two thresholds (S, S').

3. Method of speech recognition according to Claim 2, **characterized in that** the step of searching for an energy incompatibility also comprises a comparison of the mean energy ($E_{newmod}$) of the new noise model and the mean energy ($E_{curmod}$) of the current noise model with a floor energy threshold ($E_{min}$) below which the noise is negligible, the energy incompatibility determined by the comparison of the ratio of the mean energy ($E_{newmod}$) of the new noise model to the mean energy ($E_{curmod}$) of the current noise model being ignored when the mean energy ($E_{newmod}$) of the new noise model and the mean energy ($E_{curmod}$) of the current noise model are both less than the floor energy threshold ($E_{min}$).

4. Method of speech recognition according to one of Claims 1 to 3, **characterized in that** the step of searching for a spectral incompatibility comprises, with the help of spectral coefficients ($B_{i,curmod}$, $B_{i,newmod}$) manifesting respectively the spectral energy of the frames of the current noise model and the spectral energy of the frames of the new noise model in at least one frequency channel (i), a comparison of the ratio of the spectral coefficient ($B_{i,newmod}$) associated with the frequency channel (i) of the new noise model to the spectral coefficient ($B_{i,curmod}$) associated with the same frequency channel (i) of the current noise model with a low threshold (Sf') and a high threshold (Sf), a spectral incompatibility being found if the ratio lies outside the interval bounded by the two thresholds (Sf, Sf').

5. Method of speech recognition according to Claim 4, **characterized in that** the step of searching for a spectral incompatibility also comprises, for at least one frequency channel (i), a comparison of the spectral coefficient ($B_{i,newmod}$) of the new noise model in this frequency channel (i) and of the spectral coefficient ($B_{i,curmod}$) of the current noise model in this frequency channel (i) with a floor spectral coefficient ($B_{i,min}$) associated with this frequency channel (i), below which floor the noise is negligible, a spectral incompatibility determined by the comparison of the ratio of the spectral coefficients being ignored when, for this frequency channel (i), the spectral coefficients of the new model and of the current model are both less than the floor spectral coefficient ($B_{i,min}$).

6. Method of speech recognition according to one of Claims 1 to 5, **characterized in that** the phase (2) of parametrization comprises a step of determining spectral coefficients ($B_{i, par}$) each associated with a frequency channel (i) each manifesting a representation of the spectral energy of a frame containing speech in the frequency channel (i), the step (200, 210) of adapting the set of parameters comprising a determination, for each spectral coefficient ($B_{i, par}$), of a robustness operator (OpRob ($B_{i, par}$)), this robustness operator manifesting the confidence to be accorded to the spectral coefficient ($B_i$, par) with respect to the noise level of the new noise model in the same frequency channel (i),
a weighting of the spectral coefficient ($B_{i,par}$) with the robustness operator (OpRob ($B_{i, par}$)),
a determination of the vector of parameters with the help of the weighted spectral coefficients.

7. Method according to Claim 6, **characterized in that** the robustness operator (OpRob($B_{i, par}$)) satisfies the following relation:

$$\text{OpRob}\left(B_{i,par}\right) = \left\{\max\left(0.25 + \frac{B_{i,par} - P\left(B_{i,newmod}\right)}{B_{i,par} + 2P\left(B_{i,newmod}\right)}, 0\right)\right\}^2$$

$B_{i,par}$ being the spectral coefficient and P ($B_{i,newmod}$) a parameter dependent on the noise level of the new noise model having triggered the transition, in the frequency channel (i).

8. Method according to one of Claims 1 to 7, **characterized in that** the phase (33) of updating the reference space (32) comprises with the help of base spectral coefficients each associated with a frequency channel (i), each manifesting the spectral energy of a base frame obtained during the learning phase, the determination of a robustness operator (OpRob($B_{i,bas}$)) for each base spectral coefficient ($B_{i,bas}$), this robustness operator manifesting the confidence to be accorded to the spectral coefficient ($B_{i,bas}$) with respect to the noise level of the new noise model in the same frequency channel (i),
the weighting of the base spectral coefficients ($B_{i,bas}$) with the respective robustness operators (OpRob ($B_{i,bas}$)),
the formulation of the references updated with the weighted spectral coefficients.

9. Method according to Claim 8, **characterized in that** the robustness operator (OpRob ($B_{i,bas}$)) satisfies the following relation:

$$\text{OpRob}\left(B_{i.bas}\right) = \left\{\max\left(0.25 + \frac{B_{i,bas} - P\left(B_{i,newmod}\right)}{B_{i,bas} + 2P\left(B_{i,newmod}\right)}, 0\right)\right\}^2$$

$B_{i,bas}$ being the base spectral coefficient and P(Bi,newmod) a parameter dependent on the noise level of the new noise model having triggered the transition, in the frequency channel (i).

10. Method according to one of Claims 8 or 9, in which the references are formulated with the help of compressed base spectral coefficients, **characterized in that** it uses a conversion table (321) for converting the compressed base spectral coefficients into the compressed and weighted base spectral coefficients.

11. Method according to Claim 10, **characterized in that** the conversion table (321) contains the non-compressed base spectral coefficients ($B_{i,bas}$) obtained by applying the inverse of the compression function to the compressed base coefficients and **in that** it comprises a determination of the robustness operators (OpRob ($B_{i,bas}$)) for each of the non-compressed base spectral coefficients ($B_{i,bas}$),
a weighting of the non-compressed base spectral coefficients ($B_{i,bas}$),
a compression of non-compressed and weighted base spectral coefficients in such a way as to obtain the compressed and weighted base spectral coefficients.

12. Method according to one of Claims 1 to 11,
**characterized in that** it uses as references a series of time frames corresponding to one or more words, this series of frames being identified by a series of vectors of parameters, these parameters being obtained by compression of spectral coefficients.

**13.** Method according to one of Claims 1 to 12, **characterized in that** it uses as references a series of time frames corresponding to one or more phonemes, this series of frames being identified by the centre and the standard deviation of a Gaussian function, this centre and this standard deviation depending on the parameters of the vectors of parameters of the frames.

**14.** Method according to one of Claims 1 to 13, **characterized in that** it comprises a phase (6) of de-noising of the time frames containing speech before the parametrization phase (2).

**15.** System for speech recognition in a noisy acoustic signal, for the implementation of the method according to one of Claims 1 to 14, **characterized in that** it comprises:

means (1) for acquiring the acoustic signal digitizing it and splitting it into time frames,
a parametrization chain (2) for translating the time frames containing the speech into vectors of parameters in the frequency domain,
means of recognition of shapes (3) with a space (32) of references acquired during a learning, for comparing the vectors of parameters emanating from the parametrization chain with the references, so as to obtain the recognition by determination of a reference that most closely approximates the vectors of parameters, means of speech detection (7), during which the noise frames alone are isolated, means (5) of modelling the noise so as to formulate in a repeated manner noise models, a new noise model replacing a current noise model,
means (50) of detecting a noise transition between the new noise model and the current noise model,
means (200, 210) for adapting the parametrization chain to the noise of the new noise model having triggered the noise transition,
means (33) for updating the references of the reference space (32) as a function of the noise level of the new noise model having triggered the noise transition.

**16.** System for speech recognition according to Claim 15, **characterized in that** the means (33) for updating the references of the reference space (32) comprise a first memory space (324) for storing the updated references, these updated references having to replace current references used for the recognition of shapes before the detection of the noise transition, these current references being stored in a second memory space (325).

**17.** System for speech recognition according to one of Claims 15 or 16, **characterized in that** it comprises a memory space (320) for storing compressed base spectral coefficients obtained with the help of base spectral coefficients each associated with a frequency channel (i), these base spectral coefficients each manifesting the spectral energy of a base frame emanating from the learning, a conversion table (321) for converting the compressed base spectral coefficients into compressed base spectral coefficients each weighted by a robustness operator ($OpRob(B_{i,bas})$) dependent on the noise level of the new noise model having triggered the transition and on the base spectral coefficient ($B_{i,bas}$) to be weighted, these compressed and weighted base spectral coefficients being used for the updating of the references of the reference space.

**18.** System for speech recognition according to one of Claims 15 or 16, **characterized in that** it comprises means (6) for de-noising the time frames containing speech before their parametrization.

**Patentansprüche**

**1.** Verfahren zur Spracherkennung in einem verrauschten akustischen Signal, das aufweist:

eine Phase (1) der Digitalisierung und des Zerschneidens des verrauschten akustischen Signals in eine Folge von Zeitrahmen,
eine Phase (2) der Parametrisierung von Sprache enthaltenden Zeitrahmen, um für jeden Rahmen einen Vektor von Parametern im Frequenzbereich zu erhalten, wobei dieser Parametervektor den akustischen Inhalt des Rahmens ausdrückt,
eine Phase (3) der Erkennung von Formen, in der die Parametervektoren bezüglich von während einer vorhergehenden Lernphase in einem Referenzbereich voreingespeicherten Referenzen ausgewertet werden, um die Erkennung durch Bestimmung mindestens einer Referenz zu erhalten, die den Parametervektoren am nächsten liegt,

eine Phase der Spracherfassung (7), während der nur die Rauschrahmen isoliert werden,

eine Phase (5) der wiederholten Suche nach in der Folge von Zeitrahmen aufeinander folgenden Rauschmodellen, wobei ein neues Rauschmodell ein laufendes Rauschmodell ersetzt, wobei ein Rauschmodell mehrere aufeinanderfolgende Rahmen enthält,

**dadurch gekennzeichnet, dass** es aufweist

eine Phase (50) der Suche nach einem Rauschübergang zwischen dem neuen Rauschmodell und dem laufenden Modell, wobei die Phase der Suche nach einem Übergang einen Schritt der Suche nach einer energetischen Inkompatibilität und/oder einen Schritt der Suche nach einer spektralen Inkompatibilität zwischen dem neuen Rauschmodell und dem laufenden Modell enthält, wobei die Erfassung einer Inkompatibilität einen Rauschübergang ausdrückt,

und wenn ein Rauschübergang erfasst wurde, **dadurch**, dass es eine Phase (33) der Aktualisierung des Referenzbereichs (32) in Abhängigkeit von dem neuen Rauschmodell enthält, wobei die Parametrisierungsphase (2) einen Schritt der Anpassung (200, 210) der Parameter an das neue Rauschmodell enthält.

2. Spracherkennungsverfahren nach Anspruch 1, **dadurch gekennzeichnet, dass** der Schritt der Suche nach einer energetischen Inkompatibilität den Vergleich des Verhältnisses zwischen der mittleren Energie ($E_{nouvmod}$) des neuen Rauschmodells und der mittleren Energie ($E_{modcour}$) des laufenden Rauschmodells mit einem niedrigen Schwellwert (S') und einem hohen Schwellwert (S) enthält, wobei eine energetische Inkompatibilität gefunden wird, wenn das Verhältnis außerhalb des Intervalls liegt, das von den beiden Schwellwerten (S, S') begrenzt wird.

3. Spracherkennungsverfahren nach Anspruch 2, **dadurch gekennzeichnet, dass** der Schritt der Suche nach einer energetischen Inkompatibilität ebenfalls einen Vergleich der mittleren Energie ($E_{nouvmod}$) des neuen Rauschmodells und der mittleren Energie ($E_{modcour}$) des laufenden Rauschmodells mit einem Mindest-Energieschwellwert ($E_{min}$) enthält, unterhalb dessen das Rauschen vernachlässigbar ist, wobei die durch den Vergleich des Verhältnisses zwischen der mittleren Energie ($E_{nouvmod}$) des neuen Rauschmodells und der mittleren Energie ($E_{modcour}$) des laufenden Rauschmodells bestimmte energetische Inkompatibilität ignoriert wird, wenn die mittlere Energie ($E_{nouvmod}$) des neuen Rauschmodells und die mittlere Energie ($E_{modcour}$) des laufenden Rauschmodells beide unter dem Mindest-Energieschwellwert ($E_{min}$) liegen.

4. Spracherkennungsverfahren nach einem der Ansprüche 1 bis 3, **dadurch gekennzeichnet, dass** der Schritt der Suche nach einer spektralen Inkompatibilität ausgehend von Spektralkoeffizienten ($B_{i,modcour}$, $B_{i,nouvmod}$), die die Spektralenergie der Rahmen des laufenden Rauschmodells bzw. die Spektralenergie der Rahmen des neuen Rauschmodells in mindestens einem Frequenzkanal (i) ausdrücken, einen Vergleich des Verhältnisses zwischen dem dem Frequenzkanal (i) des neuen Rauschmodells zugeordneten Spektralkoeffizienten ($B_{i,nouvmod}$) und dem dem gleichen Frequenzkanal (i) zugeordneten Spektralkoeffizienten ($B_{i,modcour}$) des laufenden Rauschmodells mit einem niedrigen Schwellwert (Sf') und einem hohen Schwellwert (Sf) enthält, wobei eine spektrale Inkompatibilität gefunden wird, wenn das Verhältnis sich außerhalb des von den beiden Schwellwerten (Sf, Sf') begrenzten Intervalls befindet.

5. Spracherkennungsverfahren nach Anspruch 4, **dadurch gekennzeichnet, dass** der Schritt der Suche nach einer spektralen Inkompatibilität ebenfalls für mindestens einen Frequenzkanal (i) einen Vergleich des Spektralkoeffizienten ($B_{i,nouvmod}$) des neuen Rauschmodells in diesem Frequenzkanal (i) und des Spektralkoeffizienten ($B_{i,modcour}$) des laufenden Rauschmodells in diesem Frequenzkanal (i) mit einem diesem Frequenzkanal (i) zugeordneten Mindest-Spektralkoeffizienten ($B_{i,min}$) enthält, ein Mindestwert, unterhalb dessen das Rauschen vernachlässigbar ist, wobei eine spektrale Inkompatibilität, die durch den Vergleich des Verhältnisses zwischen Spektralkoeffizienten bestimmt wird, ignoriert wird, wenn für diesen Frequenzkanal (i) die Spektralkoeffizienten des neuen Modells und des laufenden Modells beide unter dem Mindest-Spektralkoeffizienten ($B_{i,min}$) liegen.

6. Spracherkennungsverfahren nach einem der Ansprüche 1 bis 5, **dadurch gekennzeichnet, dass** die Phase (2) der Parametrisierung einen Schritt der Bestimmung von je einem Frequenzkanal (i) zugeordneten Spektralkoeffizienten ($B_{i,par}$) aufweist, die je eine Darstellung der Spektralenergie eines Sprache enthaltenden Rahmens im Frequenzkanal (i) ausdrücken,

den Schritt (200, 210) der Anpassung des Satzes von Parametern, der für jeden Spektralkoeffizienten ($B_{i,par}$) eine Bestimmung eines Robustheitsoperators ($OpRob(B_{i,par})$) aufweist, wobei dieser Robustheitsoperator das dem Spektralkoeffizient ($B_{i,par}$) bezüglich des Rauschpegels des neuen Modells im gleichen Frequenzkanal (i) zu gewährende Vertrauen ausdrückt,

eine Gewichtung des Spektralkoeffizienten ($B_{i,par}$) mit dem Robustheitsoperator ($OpRob (B_{i,par})$),

eine Bestimmung des Parametervektors ausgehend von den gewichteten Spektralkoeffizienten aufweist.

7. Verfahren nach Anspruch 6, **dadurch gekennzeichnet, dass** der Robustheitsoperator (OpRob ($B_{i,par}$)) die folgende Beziehung erfüllt:

$$OpRob(B_{i,par}) = \left\{ max\left( 0,25 + \frac{B_{i,par} - P(B_{i,nouvmod})}{B_{i,par} + 2P(B_{i,nouvmod})}, 0 \right) \right\}^2$$

wobei $B_{i,par}$ der Spektralkoeffizient und P($B_{i,nouvmod}$) ein Parameter ist, der vom Rauschpegel des neuen Rauschmodells abhängt, das den Übergang im Frequenzkanal (i) ausgelöst hat.

8. Verfahren nach einem der Ansprüche 1 bis 7,
**dadurch gekennzeichnet, dass** die Phase (33) der Aktualisierung des Referenzbereichs (32) ausgehend von je einem Frequenzkanal (i) zugeordneten Basis-Spektralkoeffizienten, die je die Spektralenergie eines Basisrahmens ausdrücken, der in der Lernphase erhalten wurde, die Bestimmung eines Robustheitsoperators (OpRob ($B_{i,bas}$)) für jeden Basis-Spektralkoeffizienten ($B_{i,bas}$), wobei dieser Robustheitsoperator das dem Spektralkoeffizienten ($B_{i,bas}$) bezüglich des Rauschpegels des neuen Rauschmodells im gleichen Frequenzkanal (i) zu gewährende Vertrauen ausdrückt,
die Gewichtung der Basis-Spektralkoeffizienten ($B_{i,bas}$) mit den jeweiligen Robustheitsoperatoren (OpRob ($B_{i,bas}$)),
die Ausarbeitung der aktualisierten Referenzen mit den gewichteten Spektralkoeffizienten aufweist.

9. Verfahren nach Anspruch 8, **dadurch gekennzeichnet, dass** der Robustheitsoperator (OpRob ($B_{i,bas}$)) die folgende Beziehung erfüllt:

$$OpRob(B_{i,bas}) = \left\{ max\left( 0,25 + \frac{B_{i,bas} - P(B_{i,nouvmod})}{B_{i,bas} + 2P(B_{i,nouvmod})}, 0 \right) \right\}^2$$

wobei $B_{i,bas}$ der Basis-Spektralkoeffizient und P (Bi,nouvmod) ein Parameter ist, der vom Rauschpegel des neuen Rauschmodells abhängt, das den Übergang im Frequenzkanal (i) ausgelöst hat.

10. Verfahren nach einem der Ansprüche 8 oder 9, bei dem die Referenzen ausgehend von komprimierten Basis-Spektralkoeffizienten ausgearbeitet werden, **dadurch gekennzeichnet, dass** es eine Konvertierungstabelle (321) verwendet, um die komprimierten Basis-Spektralkoeffizienten in die komprimierten und gewichteten Basis-Spektralkoeffizienten zu konvertieren.

11. Verfahren nach Anspruch 10, **dadurch gekennzeichnet, dass** die Konvertierungstabelle (321) die nicht komprimierten Basis-Spektralkoeffizienten ($B_{i,bas}$) enthält, die durch Anwendung des Umkehrwerts der Komprimierungsfunktion an die komprimierten Basiskoeffizienten erhalten werden, und dass es
eine Bestimmung der Robustheitsoperatoren (OpRob ($B_{i,bas}$)) für jeden der nicht komprimierten Basis-Spektralkoeffizienten ($B_{i,bas}$),
eine Gewichtung der nicht komprimierten Basis-Spektralkoeffizienten ($B_{i,bas}$),
eine Komprimierung von nicht komprimierten und gewichteten Basis-Spektralkoeffizienten aufweist, um die komprimierten und gewichteten Basis-Spektralkoeffizienten zu erhalten.

12. Verfahren nach einem der Ansprüche 1 bis 11, **dadurch gekennzeichnet, dass** es als Referenzen eine Folge von Zeitrahmen verwendet, die einem oder mehreren Wörtern entsprechen, wobei diese Rahmenfolge durch eine Reihe von Parametervektoren identifiziert wird, wobei diese Parameter durch Komprimierung von Spektralkoeffizienten erhalten werden.

13. Verfahren nach einem der Ansprüche 1 bis 12, **dadurch gekennzeichnet, dass** es als Referenzen eine Folge von Zeitrahmen entsprechend einem oder mehreren Phonemen verwendet, wobei diese Rahmenfolge durch das Zentrum und die Standardabweichung einer Gaußschen Funktion identifiziert wird, wobei dieses Zentrum und diese Standardabweichung von den Parametern der Vektoren von Parametern der Rahmen abhängen.

**14.** Verfahren nach einem der Ansprüche 1 bis 13, **dadurch gekennzeichnet, dass** es eine Phase (6) des Entrauschens der Sprache enthaltenden Zeitrahmen vor der Phase (2) der Parametrisierung enthält.

**15.** System zur Spracherkennung in einem verrauschten akustischen Signal zur Anwendung des Verfahrens nach einem der Ansprüche 1 bis 14, **dadurch gekennzeichnet, dass** es aufweist:

Mittel (1), um das akustische Signal zu erfassen, es zu digitalisieren und in Zeitrahmen zu zerschneiden, eine Parametrisierungskette (2), um die Sprache enthaltenden Zeitrahmen in Parametervektoren im Frequenzbereich auszudrücken,
Mittel zur Erkennung von Formen (3) mit einem Bereich (32) von Referenzen, die während eines Lernvorgangs erfasst wurden, um die von der Parametrisierungskette stammenden Vektoren mit den Referenzen zu vergleichen, um die Erkennung durch Bestimmung einer Referenz zu erhalten, die sich den Parametervektoren am meisten annähert, Mittel zur Spracherfassung (7), während der die Rauschrahmen alleine isoliert sind, Mittel (5) zur Modellisierung des Rauschens, um wiederholt Rauschmodelle zu erarbeiten, wobei ein neues Rauschmodell ein laufendes Rauschmodell ersetzt,
Mittel (50) zur Erfassung eines Rauschübergangs zwischen dem neuen Rauschmodell und dem laufenden Rauschmodell,
Mittel (200, 210), um die Parametrisierungskette an das Rauschen des neuen Rauschmodells anzupassen, das den Rauschübergang ausgelöst hat,
Mittel (33), um die Referenzen des Bereichs von Referenzen (32) in Abhängigkeit vom Rauschpegel des neuen Rauschmodells zu aktualisieren, das den Rauschübergang ausgelöst hat.

**16.** Spracherkennungssystem nach Anspruch 15, **dadurch gekennzeichnet, dass** die Mittel (33), um die Referenzen des Referenzbereichs (32) zu aktualisieren, einen ersten Speicherbereich (324) aufweisen, um die aktualisierten Referenzen zu speichern, wobei diese aktualisierten Referenzen laufende Referenzen ersetzen sollen, die zur Erkennung von Formen vor der Erfassung des Rauschübergangs verwendet werden, wobei diese laufenden Referenzen in einem zweiten Speicherbereich (325) gespeichert sind.

**17.** Spracherkennungssystem nach einem der Ansprüche 15 oder 16, **dadurch gekennzeichnet, dass** es einen Speicherbereich (320), um komprimierte Basis-Spektralkoeffizienten zu speichern, die ausgehend von Basis-Spektralkoeffizienten erhalten wurden, die je einem Frequenzkanal (i) zugeordnet sind, wobei jeder dieser Basis-Spektralkoeffizienten die Spektralenergie eines Basisrahmens ausdrückt, der vom Lernvorgang stammt, und eine Konvertierungstabelle (321) aufweist, um die komprimierten Basis-Spektralkoeffizienten in komprimierte Basis-Spektralkoeffizienten zu konvertieren, die je von einem Robustheitsoperator (OpRob ($B_{i,bas}$)) abhängig vom Rauschpegel des neuen Rauschmodells, das den Übergang ausgelöst hat, und vom zu gewichtenden Basis-Spektralkoeffizienten ($B_{i,bas}$) gewichtet werden, wobei diese komprimierten und gewichteten Basis-Spektralkoeffizienten zur Aktualisierung der Referenzen des Bereichs von Referenzen verwendet werden.

**18.** Spracherkennungssystem nach einem der Ansprüche 15 oder 16, **dadurch gekennzeichnet, dass** es Mittel (6) aufweist, um die Sprache enthaltenden Zeitrahmen vor ihrer Parametrisierung zu entrauschen.

SIGNAL DE PAROLE

ACQUISITION — 1

DÉTERMINATION ÉNERGIE SPECTRALE — 21

COMPRESSION — 22

TRANSFORMATION — 23

2

3

ESPACE DE RÉFÉRENCES — 32

RECONNAISSANCE DES FORMES — 31

PAROLE RECONNUE — 4

# FIG.1a

SIGNAL ACOUSTIQUE

ACQUISITION    ⌐1

NON    DÉTECTION DE PAROLE    OUI

⌐7

5                     6

MODÉLISATION DU BRUIT   →   DÉBRUITAGE

2

DÉTERMINATION ÉNERGIE SPECTRALE    21

COMPRESSION    22

TRANSFORMATION    23

3

ESPACE DE RÉFÉRENCES   →   RECONNAISSANCE DES FORMES    31

32

PAROLE RECONNUE    ⌐4

# FIG.1b

SIGNAL ACOUSTIQUE

100

FIG.2

FIG.3a

FIG.3b

FIG.4

FIG.7

FIG.5

EP 1 154 405 B1

FIG.6